# EUROPEAN PATENT APPLICATION

(11) **EP 2 423 054 A1**
(43) Date of publication of application: **29.02.2012**
(21) Application number: 10767016.8
(22) Date of filing: 16.04.2010
(51) Int. Cl.: B60R 21/207, B60R 21/237

(54) **SIDE AIRBAG DEVICE AND METHOD FOR FOLDING BAG SECTION THEREOF**

(30) Priority: 22.04.2009 JP 2009103530
(71) Applicant: Ashimori Industry Co., Ltd., Osaka-shi Osaka 550-0014 (JP)
(72) Inventor: OOMORI Tomohisa, Aki-gun Hiroshima 730-8670 (JP); NAKAYA Koichi, Aki-gun Hiroshima 730-8670 (JP); YOSHINAGA Junichi, Settsu-shi Osaka 566-0001 (JP); HASHIZUME Tomoki, Settsu-shi Osaka 566-0001 (JP); YAMAMOTO Shuji, Settsu-shi Osaka 566-0001 (JP)
(74) Representative: Dendorfer, Claus
(86) International application number: PCT/JP2010/056846
(87) International publication number: WO 2010/122959

(57) **Abstract**

The present invention provides a side airbag device, in which an airbag lower portion including a loin protection portion is expanded generally right downward to expand and develop the loin protection portion quickly, so that at the time of a side crash of the vehicle, the airbag is located between the loins of the passenger and the door trim with certainty to protect the passenger, and a method for folding a bag section thereof. The airbag 42 includes an airbag upper portion 42U including a chest protection portion for protecting the chest of a passenger when the airbag 42 is developed and an airbag lower portion 42L including a loin protection portion for protecting the loins of the passenger when the airbag 42 is developed. The airbag 42 is accommodated in the state of being folded such that a bottom part of the airbag upper portion 42U and a top part of the airbag lower portion 42L overlap (OL) each other in a width direction of the vehicle, and such that a bottom end of the airbag lower portion 42L is located below a top end of the airbag lower portion 42L.

## Description

### TECHNICAL FIELD

The present invention relates to a side airbag device accommodated in a seat back of a seat for a vehicle and expanded and developed at the time of a side crash for protecting a passenger, and a method for folding a bag section thereof.

### BACKGROUND ART

A conventionally known side airbag device is built in a seat back of a seat for a vehicle. At the time of a side crash of the vehicle, the airbag is supplied with gas from an inflator to be expanded and developed, and is located between the passenger and an invading door trim to protect the chest of the passenger. Recently, airbags tend to be increased in size so as to protect an area including the chest and also the loins of the passenger.

The door trim includes an armrest projecting inward in a width direction of the vehicle, and the loins of the passenger project most outward among the parts of his/her body. The side airbag device is desired to have a function of, at the time of a side crash of the vehicle, expanding and developing and thus locating the airbag between the loins of the passenger and the invading door trim so as to urge the loins of the passenger inward in the width direction of the vehicle.
Patent Documents 1 and 2 disclose a side airbag device designed to protect an area including the chest and also the loins of the passenger.

According to the structure disclosed in Patent Document 1, the inner space of the airbag is partitioned into a lower chamber and an upper chamber by a seam, and an inflator is provided such that a gas ejecting section thereof is directed downward, i.e., toward the lower chamber, so as to expand and develop the lower chamber with priority.

According to the structure disclosed in Patent Document 2, the inner space of the airbag is partitioned into an upper airbag chamber corresponding to the chest of the passenger and a lower airbag chamber corresponding to the loins of the passenger. A sewn part is provided for distributing gas generated by the inflator to the upper and lower airbag chambers appropriately so as to provide a desired pressure difference between in the upper and lower airbag chambers. Thus, the loins of the passenger are held quickly by the lower airbag chamber corresponding to the loins of the passenger.

However, neither Patent Document 1 nor 2 mentioned above is directed to a structure for folding the airbag. Therefore, the conventional structure disclosed in Patent Document 1 has a problem of requiring a specific inflator having the gas ejecting section directed toward the lower chamber, and the conventional structure disclosed in Patent Document 2 has a problem that the sewing structure for the airbag is complicated.

### CITATION LIST

### PATENT LITERATURE

Patent Document 1: Japanese Laid-Open Patent Publication No. 2005-41457
Patent Document 2: Japanese Laid-Open Patent Publication No. 2005-186891

### SUMMARY OF INVENTION

### TECHNICAL PROBLEM

Hence, the present invention has an obj ect of providing a side airbag device and a method for folding a bag section thereof, capable of quickly expanding and developing a loin protection section of the airbag so that, at the time of a side crash of a vehicle, the airbag is located between the loins of the passenger and the door trim with certainty to protect the passenger.

### SOLUTION TO PROBLEM

A side airbag device according to the present invention is a side airbag device accommodated in a seat back of a seat for a vehicle. The side airbag device includes an airbag; and an inflator for supplying gas to the airbag to develop the airbag at the time of a crash of the vehicle. The airbag includes an airbag upper portion including a chest protection portion for protecting the chest of a passenger sitting on the seat when the airbag is developed and an airbag lower portion including a loin protection portion for protecting the loins of the passenger sitting on the seat when the airbag is developed; and the airbag is accommodated in the state of being folded such that a bottom part of the airbag upper portion and a top part of the airbag lower portion overlap each other in a width direction of the vehicle, and such that a bottom end of the airbag lower portion is located below a top end of the airbag lower portion.

According to this structure, the airbag is accommodated in the state of being folded such that the bottom part of the airbag upper portion and the top part of the airbag lower portion overlap each other in the width direction of the vehicle, and such that the bottom end of the airbag lower portion is located below the top end of the airbag lower portion. Therefore, when the airbag is expanded and developed, gas is supplied to the airbag generally right downward, and the airbag lower portion including the loin protection portion is expanded generally right downward. This allows the loin protection portion to be expanded and developed quickly. Hence, at the time of a side crash of the vehicle, the airbag can be located between the loins of the passenger and the door trim with certainty to protect the passenger.
In summary, the loin protection portion of the airbag is required to have a function of being expanded and developed more quickly than the chest protection portion and, at the time of a side crash, first urging the body of the passenger (especially, the loins) inward in the vehicle chamber. Such a requirement can be fulfilled by the above-described structure.

In an embodiment of the present invention, in the state where the airbag is folded, the top end of the airbag lower portion may have a first fold extending generally in a front-rear direction of the seat; the bottom end of the airbag upper portion may have a second fold extending generally in the front-rear direction of the seat; and the first fold may be located above the second fold.
According to this structure, since the first fold is located above the second fold, the bottom part of the airbag upper portion and the top part of the airbag lower portion overlap each other in the width direction of the vehicle. The bottom end of the airbag lower portion is located below the top end of the airbag lower portion. Therefore, in the same manner as described above, when the airbag is expanded and developed, gas is supplied to the airbag generally right downward, and the airbag lower portion including the loin protection portion is expanded generally right downward. This allows the loin protection portion to be expanded and developed quickly. Hence, at the time of a side crash, the airbag can be located between the loins of the passenger and the door trim with certainty.

In an embodiment of the present invention, in the state where the airbag is folded, a front edge of the airbag, which is located on the front side when the airbag is developed, may be turned toward the inflator, so that the airbag has a shape lengthy in a top-bottom direction; the lengthy airbag upper portion may include an upper outer portion located on the outer side in the width direction of the vehicle and an upper inner portion located on the inner side in the width direction of the vehicle; the top end of the airbag lower portion may have a first fold extending generally in a front-rear direction of the seat; the bottom end of the airbag upper portion may have a second fold extending generally in the front-rear direction of the seat; a folded portion may be formed between the first fold and the second fold; and the airbag may be folded internally such that the first fold, the second fold, and the folded portion are held between the upper outer portion and the upper inner portion.

According to this structure, the airbag is folded internally (put into an internally folded state) in the state where the folds and the folded portion are held between the upper outer portion and the upper inner portion of the airbag upper portion.
Even in the case where the airbag is in such an internally folded state, when the airbag is expanded and developed, gas is supplied to the airbag generally right downward, and the airbag lower portion including the loin protection portion is expanded generally right downward. This allows the loin protection portion to be expanded and developed quickly. Hence, at the time of a side crash, the airbag can be located between the loins of the passenger and the door trim with certainty.

In an embodiment of the present invention, in the state where the airbag is folded, a front edge of the airbag, which is located on the front side when the airbag is developed, may be turned toward the inflator, so that the airbag has a shape lengthy in a top-bottom direction; the airbag lower portion having the lengthy shape may include a lower outer portion located on the outer side in the width direction of the vehicle and a lower inner portion located on the inner side in the width direction of the vehicle; the top end of each of the lower outer portion and the lower inner portion may have a first fold extending generally in a front-rear direction of the seat; the bottom end of the airbag upper portion may have a second fold extending generally in the front-rear direction of the seat; a folded portion may be formed between each of the first folds and the second fold; and the airbag may be folded externally such that the folded portion of the lower outer portion and the folded portion of the lower inner portion are located outside the airbag upper portion.

According to this structure, the airbag is folded externally (put into an externally folded state) such that the folded portion of the lower outer portion and the folded portion of the lower inner portion are located outside the airbag upper portion.
Even in the case where the airbag is in such an externally folded state, when the airbag is expanded and developed, gas is supplied to the airbag generally right downward, and the airbag lower portion including the loin protection portion is expanded generally right downward. This allows the loin protection portion to be expanded and developed quickly. Hence, at the time of a side crash, the airbag can be located between the loins of the passenger and the door trim with certainty.

In an embodiment of the present invention, a third fold located below the first fold and extending generally in the front-rear direction of the seat may be provided in the bottom part of the loin protection portion; and a part of the loin protection portion, which is located below the third fold when the airbag is developed, may be folded internally or externally.

According to this structure, the third fold is provided, and the part of the loin protection portion, which is located below the third fold when the airbag is developed, is folded internally or externally. Therefore, the size in the top-bottom direction of the airbag in the folded state can be decreased, and neither the third fold nor the part of the loin protection portion inhibits the airbag from being developed.
In addition, the bottom part of the loin protection portion is also folded internally or externally. Therefore, the bottom part of the loin protection portion is expanded and developed generally right downward by the pressure of gas from the inflator. Thus, the loin protection portion is expanded and developed more quickly.

In an embodiment of the present invention, the chest protection portion and the loin protection portion of the airbag may be partitioned from each other by a partition extending generally from front to rear in the state where the airbag is developed, except for a gas inlet of the inflator and the vicinity thereof.
It is desirable that the volume of the loin protection portion partitioned by the partition is smaller than the volume of the chest protection portion.

According to this structure, the chest protection portion and the loin protection portion of the airbag are partitioned from each other by the partition. Therefore, gas from the inflator can be concentratedly supplied to the loin protection portion, and thus the loin protection portion can be expanded and developed more quickly. In other words, the loin protection portion can be expanded and developed with priority.

In an embodiment of the present invention, a door trim located to the side of the seat may include an armrest projecting inward in a vehicle chamber; and the airbag may be folded in the state where the overlap area of the airbag upper portion and the airbag lower portion is located below a top surface of the armrest.

According to this structure, the loin protection portion of the airbag can be expanded and developed between the armrest and the loins of the passenger. Therefore, even on a side surface of the armrest of the door trim projecting inward in the vehicle chamber, the loin protection portion can be developed quickly.
Especially because the overlap area is located below the top surface of the armrest, the loin protection portion is developed below the top surface of the armrest. Thus, the loin protection portion can be developed between the armrest and the seat with certainty.

Also, the loin protection portion of the airbag can be expanded and developed between the seat and a space which is below the armrest and projects more outward, in the width direction of the vehicle, with respect to the inner end of the armrest in the width direction of the vehicle.

In an embodiment of the present invention, in the state where the side airbag device is accommodated in the seat back, the airbag may be folded such that a rear edge of the airbag upper portion is located rear to a rear edge of the airbag lower portion; and a step may be formed in generally in the front-rear direction of the seat between the rear edge of the airbag upper portion and the rear edge of the airbag lower portion.

This structure has the following effects.
When the airbag lower portion is merely folded upward, the step is not formed. When the airbag is folded such that the rear edge of the airbag upper portion is located rear to the rear edge of the airbag lower portion as in the above-described structure, the step can be formed between the rear edges. This step can be effectively used.

In an embodiment of the present invention, the inflator may be provided in a bottom part of the seat back side frame, and the airbag upper portion may be folded in the state where a top end thereof is turned downward.
According to this structure, since the inflator is provided at a lower position of the seat back side frame, an upper part of the seat back side frame can be made thinner and also the inflator having rigidity does not contact the chest of the passenger at the time of a side crash.

In addition, since the inflator is provided at a lower position, gas can be provided more quickly from the inflator to the loin protection portion. Since the top end of the airbag upper portion is turned downward, the loin protection portion is expanded and developed more quickly than the chest protection portion with certainty. This allows the loin protection portion to be expanded and developed quickly. By contrast, the chest protection portion is developed after the loin protection portion, and therefore can receive the body of the passenger softly.
Since the chest of the passenger is weaker than the loins of the passenger, it is required to alleviate the impact against the chest at the time of the development of the airbag. This requirement can be fulfilled by the above-described structure.

Aside airbag device according to the present invention is a side airbag device accommodated in a seat back of a seat for a vehicle. The side airbag device includes an airbag; and an inflator for supplying gas to the airbag to develop the airbag at the time of a crash of the vehicle. The airbag includes an airbag upper portion including a chest protection portion for protecting the chest of a passenger sitting on the seat when the airbag is developed and an airbag lower portion including a loin protection portion for protecting the loins of the passenger sitting on the seat when the airbag is developed; and the airbag is folded in the state where an inner path of the airbag upper portion and an inner path of the airbag lower portion communicate to each other generally linearly in a top-bottom direction.

According to this structure, the airbag is folded in the state where the inner path of the airbag upper portion and the inner path of the airbag lower portion communicate to each other generally linearly in the top-bottom direction. Therefore, when the airbag is expanded and developed, gas is supplied to the airbag generally right downward, and the airbag lower portion including the loin protection portion is expanded generally right downward. This allows the loin protection portion to be expanded and developed quickly. Hence, at the time of a side crash of the vehicle, the airbag can be located between the loins of the passenger and the door trim with certainty to protect the passenger.

A method for folding a bag section of a side airbag device according to the present invention is a method for folding a bag section of a side airbag device including an airbag upper portion including a chest protection portion for protecting the chest of a passenger sitting on a seat when the bag section is developed and an airbag lower portion including a loin protection portion for protecting the loins of the passenger sitting on the seat when the bag section is developed. The method includes a first step of turning a front edge of the bag section, which is located on the front side of a vehicle when the bag section is developed, toward an inflator located on the rear side of the vehicle when the bag section is developed, so that the bag section has a lengthy shape; and a second step of folding the bag section such that a bottom part of the airbag upper portion and a top part of the airbag lower portion overlap each other in a width direction of the vehicle, and such that a bottom end of the airbag lower portion is located below a top end of the airbag lower portion.

For putting the bag section into a lengthy shape in the first step, the bag section may be folded into a generally roll-like shape, a complete roll shape or may be folded in zigzag.
For overlapping the bottom part of the airbag upper portion and the top part of the airbag lower portion on each other, the internally folded structure or alternatively, the externally folded structure may be selected.

According to this structure, in the first step, the front edge of the bag section is turned toward the inflator, and thus the bag section has a lengthy shape. In the second step, the bag section is folded such that the bottom part of the airbag upper portion and the top part of the airbag lower portion overlap each other in the width direction of the vehicle, and such that the bottom end of the airbag lower portion is located below the top end of the airbag lower portion.

As described above, the bag section is folded such that the bottom part of the airbag upper portion and the top part of the airbag lower portion overlap each other in the width direction of the vehicle, and such that the bottom end of the airbag lower portion is located below the top end of the airbag lower portion. Therefore, when the airbag is expanded and developed, gas is supplied to the airbag generally right downward, and the airbag lower portion including the loin protection portion is expanded generally right downward. This allows the loin protection portion to be expanded and developed quickly. Hence, at the time of a side crash of the vehicle, the airbag can be located between the loins of the passenger and the door trim with certainty to protect the passenger.
In summary, the loin protection portion of the airbag is required to have a function of being expanded and developed more quickly than the chest protection portion and, at the time of a side crash, first urging the body of the passenger inward in the vehicle chamber. Such a requirement can be fulfilled by the above-described folding method.

### ADVANTAGEOUS EFFECTS OF INVENTION

According to the present invention, when the airbag is expanded and developed, gas is supplied to the airbag generally right downward, and the airbag lower portion including the loin protection portion is expanded generally right downward. This allows the loin protection portion to be expanded and developed quickly. Hence, there is an effect of, at the time of a side crash of the vehicle, locating the airbag between the loins of the passenger and the door trim with certainty to protect the passenger.

### BRIEF DESCRIPTION OF DRAWINGS

[FIG. 1] FIG. 1 is a front view of a vehicle having a side airbag device according to the present invention therein.
[FIG. 2] FIG. 2 is a side view of an important part of FIG. 1 as seen from the right side of FIG. 1.
[FIG. 3] FIG. 3 is a side view showing a pre-folded state of an airbag.
[FIG. 4] FIG. 4 is a side view showing an intermediate state of folding of the airbag.
[FIG. 5] FIG. 5 is a side view showing an intermediate state of folding of the airbag.
[FIG. 6] FIG. 6 is a side view showing a state of the airbag folded into a lengthy shape.
[FIG. 7] FIG. 7 is a side view showing an internally folded state of the airbag.
[FIG. 8] FIG. 8 is a rear view of FIG. 7.
[FIG. 9] FIG. 9 is a side view showing another example of side airbag device.
[FIG. 10] FIG. 10 is an enlarged view of an important part of FIG. 9.
[FIG. 11] FIG. 11 is a side view showing still another example of side airbag device.
[FIG. 12] FIG. 12 is an enlarged view of an important part of FIG. 11.
[FIG. 13] FIG. 13 is a rear view of FIG. 12 showing an externally folded state of the airbag.
[FIG. 14] FIG. 14 is a side view showing still another example of side airbag device.
[FIG. 15] FIG. 15(a) is a schematic view showing an internally folded state, and FIG. 15(b) is a schematic view showing an externally folded state.
[FIG. 16] FIG. 16(a) is a schematic view showing a folded state having a shape proximate to a roll shape, FIG. 16(b) is a schematic view showing a state of being folded in a zigzag manner, and FIG. 16(c) is a schematic view showing a folded state having a roll shape.
[FIG. 17] FIG. 17(a) is a schematic view showing an internally folded state with third folds, and FIG. 17(b) is a schematic view showing an externally folded state with third folds.
[FIG. 18] FIG. 18 is a side view showing still another example of side airbag device.
[FIG. 19] FIG. 19 is a side view showing a pre-folded state of the airbag.
[FIG. 20] FIG. 20 is a side view showing a state where a top end of an airbag upper portion is turned down.
[FIG. 21] FIG. 21 is a side view showing an intermediate state of folding of the airbag.
[FIG. 22] FIG. 22 is a side view showing a state of the airbag folded into a lengthy shape.
[FIG. 23] FIG. 23 is a side view showing an internally folded state of the airbag.

### DESCRIPTION OF EMBODIMENTS

### EMBODIMENT 1

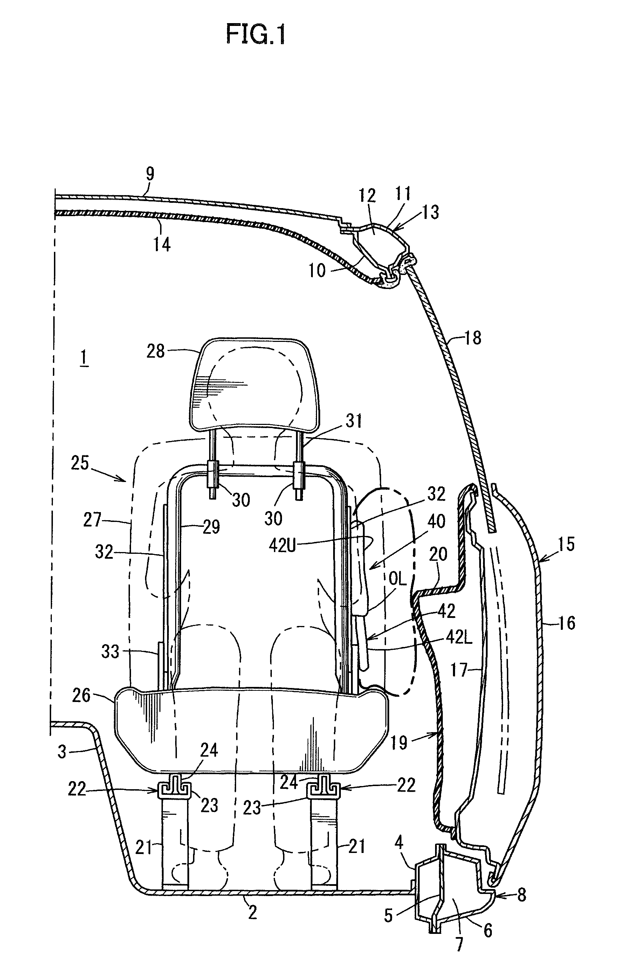

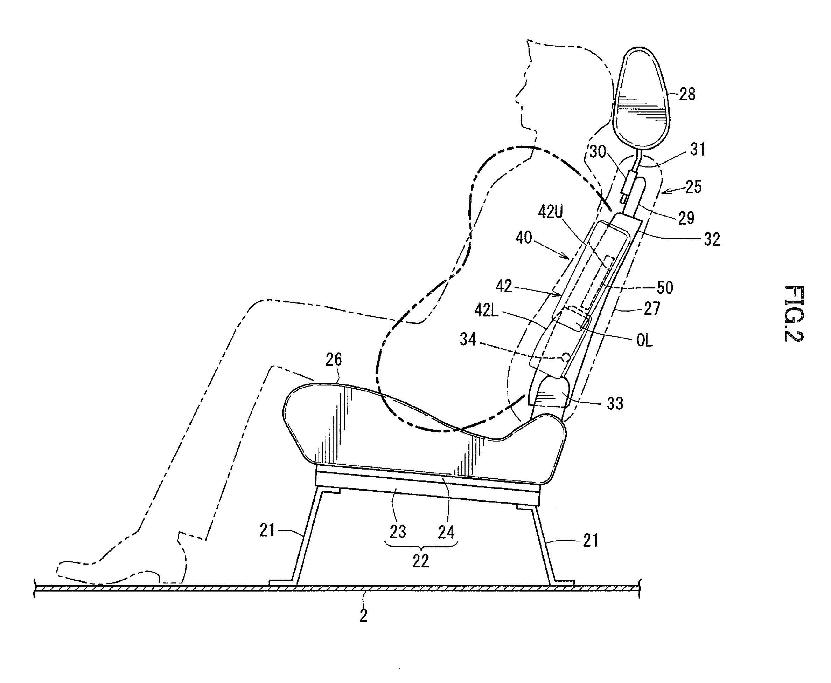

Hereinafter, an embodiment of the present invention will be described with reference to the drawings.
The drawings show a side airbag device and a method for folding a bag section thereof. First, with reference to FIG. 1 and FIG. 2, a structure of a vehicle body and a structure of a seat will be described.

As shown in FIG. 1 and FIG. 2, a floor panel 2 forming a bottom part of a vehicle chamber 1 is provided. At a central part of the floor panel 2 in a width direction of the vehicle, a tunnel section 3 projecting inward in the vehicle chamber 1 and extending in a front-rear direction of the vehicle.
At an outer end of the floor panel 2 in the width direction of the vehicle, a side sill 8 including a side sill inner 4, a side sill reinforcement 5 and a side sill outer 6 which are joined together and fixed and thus having a side sill closed cross-section 7 extending in the front-rear direction of the vehicle is attached for the purpose of improving the rigidity of a lower part and a side part of the vehicle body.

At an outer end of a roof panel 9 forming a roof part in the width direction of the vehicle, a roof side rail 13 including a roof wide rail inner 10 and a roof side rail outer 11 which are joined together and fixed and thus having a roof side closed cross-section 12 extending in the front-rear direction of the vehicle is attached for the purpose of improving the rigidity of an upper part and the side part of the vehicle body.
A top ceiling 14 is provided inner to the roof panel 9 in the vehicle chamber 1.

At a boarding opening (door opening) formed between the side sill 8 and the roof side rail 13, a door 15 (in FIG. 1, left front door of the vehicle) for opening and closing the boarding opening is provided.
The door 15 is attached via a door hinge provided in a front-side hinge pillar to the hinge pillar so as to be opened and closed, and includes a door outer panel 16, a door inner panel 17 and a door glass 18.
Inner to the door inner panel 17 in the vehicle chamber 1, a door trim 19 acting as an interior furnishing member for covering the door inner panel 17 is provided. The door trim 19 includes an armrest 20 projecting inward in the vehicle chamber 1.

As shown in FIG. 1 and FIG. 2, on the floor panel 2, a pair of, namely, left and right, seat slide rails 22 are attached by use of a plurality of seat blankets 21. The seat slide rails 22 each include a fixed lower rail 23 and a movable upper rail 24 slidable in the front-rear direction of the vehicle along the lower rail 23.
On the left and right seat slide rails 22, a seat 25 on which a passenger can sit is provided.

In the figures, a front seat (front-row seat) on the left side of the vehicle is shown as an example.
The seat 25 includes a seat cushion 26, a seat back 27 and a head rest 28. In the seat back 27, a seat back frame 29 is provided. An upper part of the seat back frame 29 is provided with a pair of, namely, left and right, head rest poles 31, adjustable in length in a top-bottom direction, via a pair of, namely, left and right, pole guides 30. The head rest 28 is supported by the head rest poles 31.

On both of the left and right sides of the seat back frame 29, seat back side frames 32 are provided. The seat cushion 26 and the seat back 27 are coupled to each other by a reclining knuckle 33, so that the seat back 27 is reclinable. The seat back side frames 32 are provided with a lumbar shaft 34 (see FIG. 2) as a shaft of a lumbar support (not shown) provided in the seat back 27.

In the seat back 27 of the seat 25 (seat for the vehicle) having the above-described structure, a side airbag device 40 is accommodated. In this embodiment, for the convenience of illustration in the figures, the front seat on the left side of the vehicle is shown as an example. Thus, the side airbag device 40 is provided at the left seat back side frame 32 which is located on the outer side in the width direction of the vehicle, among the pair of, namely, left and right seat back side frames 32.

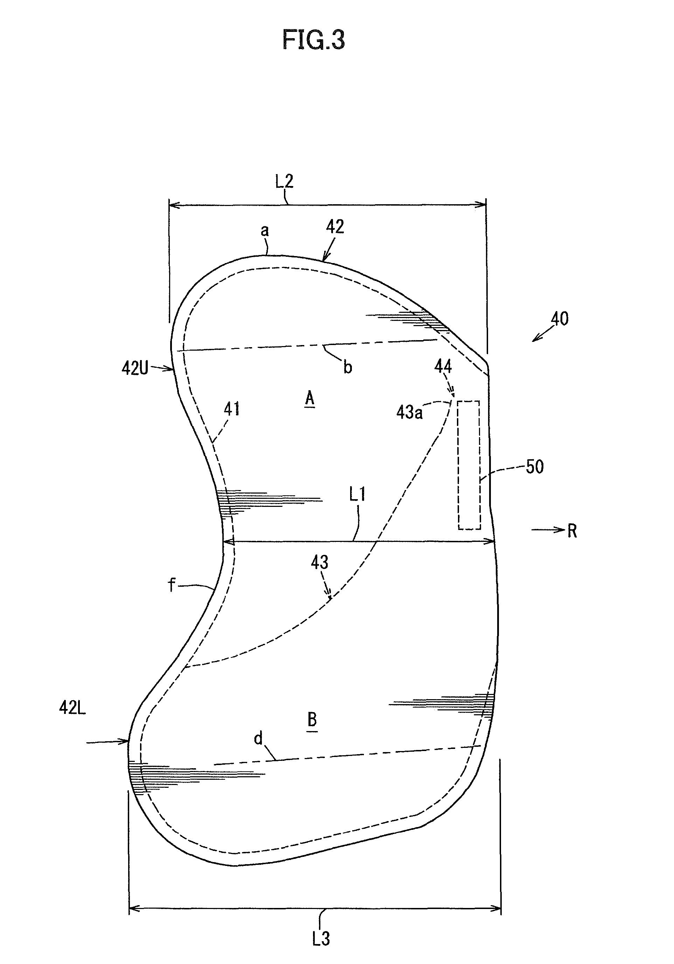

FIG. 3 is a side view of the side airbag device 40 in a pre-folded state. The side airbag device 40 includes an airbag 42 (bag section) formed of two cloth pieces of the same shape which are sewn together along the circumferences thereof by a sewing section 41, and an inflator 50 for supplying gas to the inside of the airbag 42 to develop the airbag 42 at the time of a crash of the vehicle.
The inflator 50 is provided between the two cloth pieces forming the airbag 42 and located on the rear side of the vehicle regardless of whether the airbag 42 is developed or not. As shown in FIG. 3, the inflator 50 is located to be directed in the top-bottom direction. A gas inlet (not shown) of the inflator 50 is formed at a position below the center thereof in the top-bottom direction and is directed forward.

As shown in FIG. 3, the airbag 42 (bag section) includes an airbag upper portion 42U and an airbag lower portion 42L integrally formed together. The airbag upper portion 42U includes a bust guard portion A as a chest protection portion for protecting the chest of the passenger sitting on the seat 25 when the airbag 42 is developed, the airbag lower portion 42L includes a waist guard portion B as a loin protection portion for protecting the loins of the passenger sitting on the seat 25 when the airbag 42 is developed.
In this embodiment, as shown in FIG. 3, the bust guard portion A and the waist guard portion B of the airbag 42 are partitioned from each other generally in the top-bottom direction by a seam 43 as a partition extending from front to rear in the state where the airbag is developed as shown in this figure, except for the gas inlet (gas ejecting opening) of the inflator 50 and the vicinity thereof.

Also as shown in FIG. 3, in the state where the airbag 42 is developed (pre-folded state), length L3 in the front-rear direction of the airbag lower portion 42L including the waist protecting portion B is longer than length L2 in the front-rear direction of the airbag upper portion 42U including the bust protecting portion A (L3 > L2). Length L1 in the front-rear direction of an intermediate portion of the airbag 42 in the top-bottom direction is shortest (L3 > L2 > L1). The airbag 42 is formed to have an overall shape generally like a silk cocoon when seen from the side of the vehicle.
Between a rear end 43a of the seam 43 as a partition and a front surface of the inflator 50, there is a predetermined gap 44.

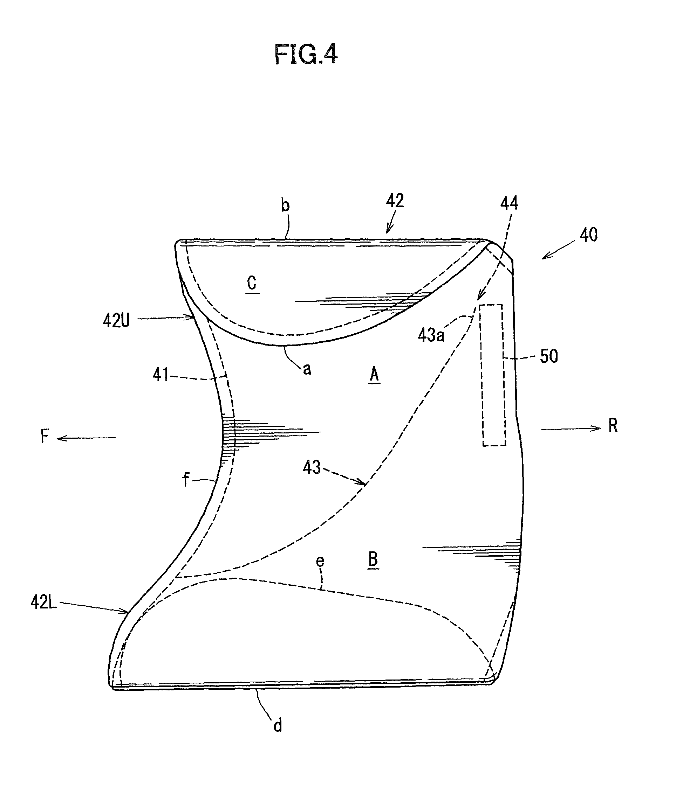

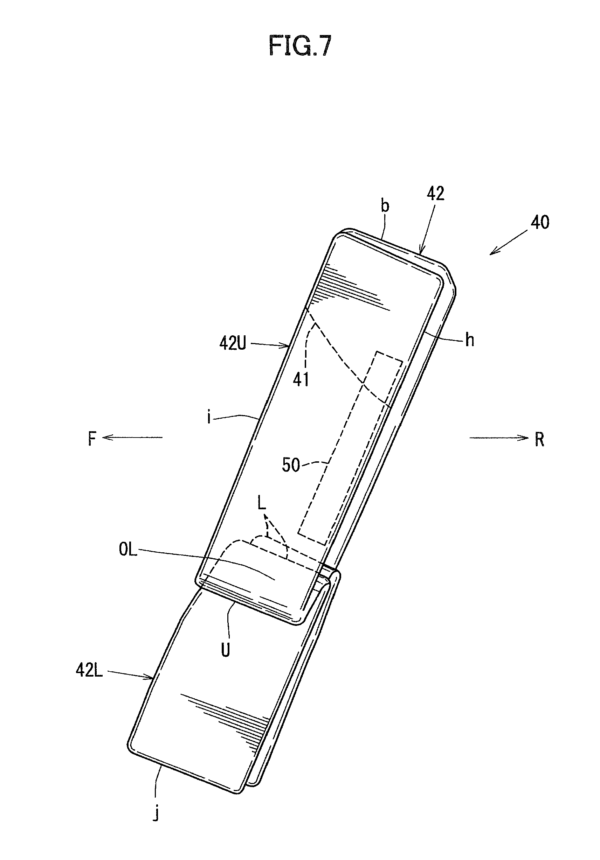

Now, a bag section folding method for folding the airbag 42 in the pre-folded state shown in FIG. 3 into a state shown in FIG. 7 will be described.
As shown in FIG. 3 and FIG. 4, a top end a of the airbag upper portion 42U is turned downward along a fold line b to form a folded portion c, and a bottom part of the airbag lower portion 42L is folded along a fold line d and inserted between the two cloth pieces forming the airbag 42, namely, inserted to the inside of the bag section to form a folded-in portion e.

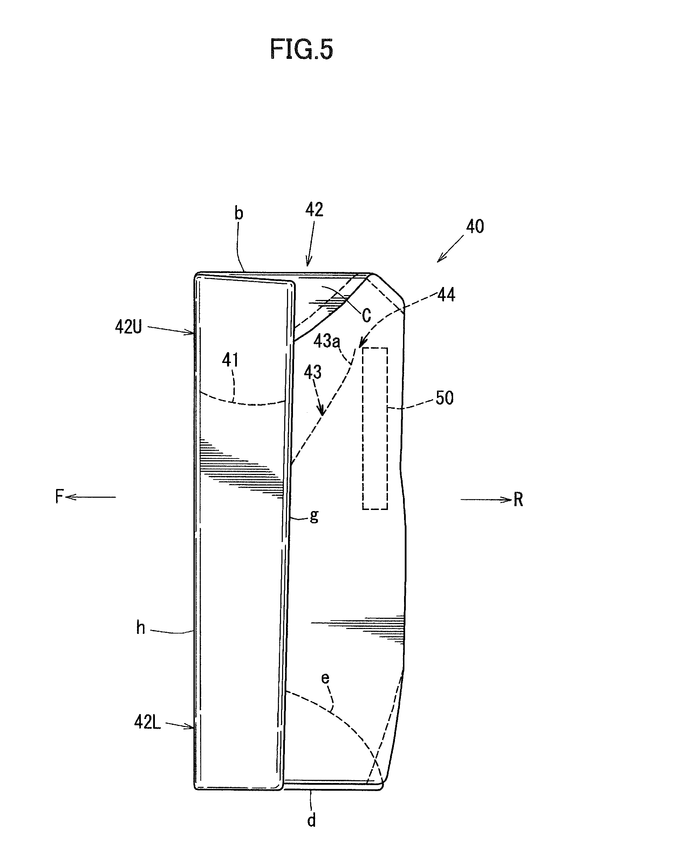

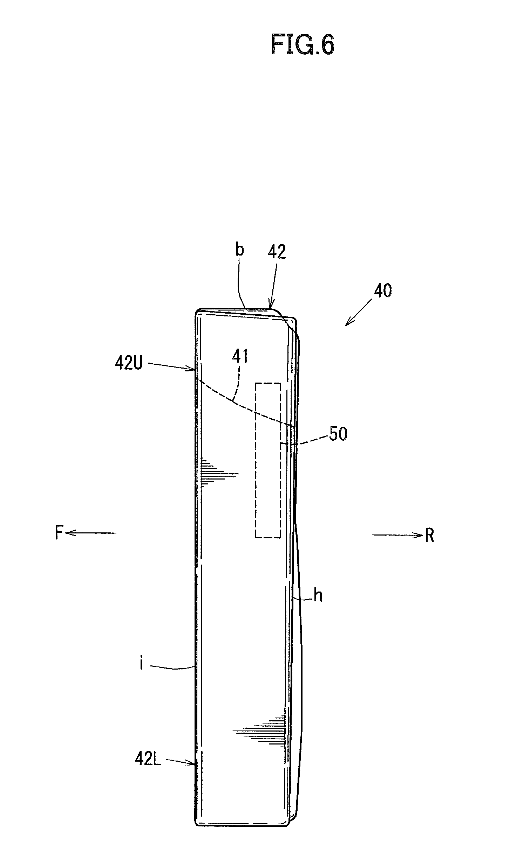

Next, from the state shown in FIG. 4, a front edge f of the airbag 42, which is located on the front side when the airbag 42 is developed, is turned toward the inflator 50 sequentially along fold lines g, h and i extending in the top-bottom direction (see FIG. 5 and FIG. 6). Thus, the airbag 42 is first put into an intermediate state shown in FIG. 5 and then is put into a lengthy shape as shown in FIG. 6 (first step).

Next, from the state shown in FIG. 6, the airbag 42 is folded as shown in FIG. 7 such that a bottom part of the airbag upper portion 42U and a top part of the airbag lower portion 42L overlap each other in the width direction of the vehicle to form an overlap portion OL, and such that a bottom end j of the airbag lower portion 42L is located below a top end of the airbag lower portion 42L (second step).

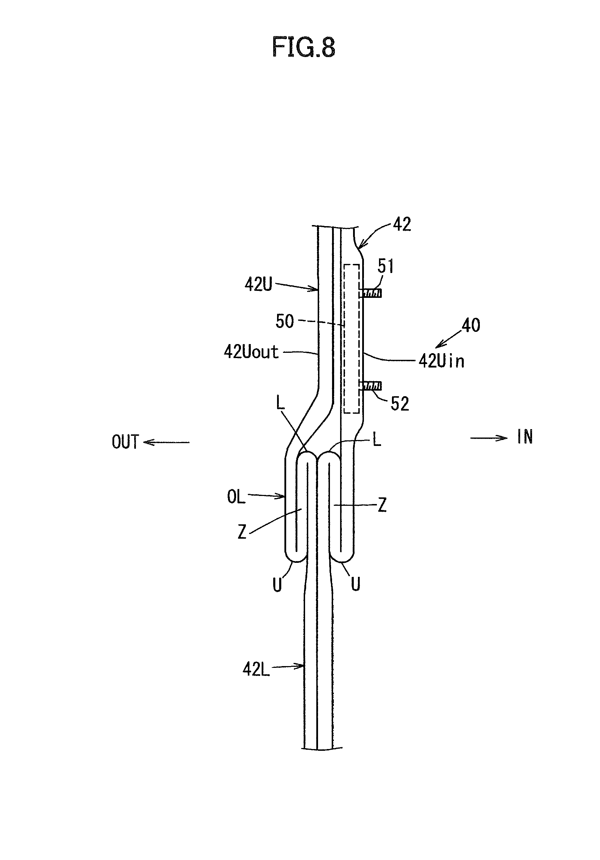

FIG. 7 is a side view of the airbag 42 in the folded state, and FIG. 8 is a rear view of FIG. 7. As shown in FIG. 7 and FIG. 8, in the folded state of the airbag 42, the top end of the airbag lower portion 42L has two first folds L extending generally in the front-rear direction of the seat 25, and a bottom end of the airbag upper portion 42U has two second folds U extending generally in the front-rear direction of the seat 25. The first folds L are located above the second folds U, and a portion between the first folds L and the second folds U is the overlap portion OL.

In this embodiment shown in FIG. 7 and FIG. 8, the airbag 42 is folded internally (put into an internally folded state), and therefore the details of the folded state of the airbag 42 are as follows.
As shown in FIG. 8, the lengthy airbag upper portion 42U includes an upper outer portion 42Uout located on the outer side in the width direction of the vehicle and an upper inner portion 42Uin located on the inner side in the width direction of the vehicle. Between the first folds L and the second folds U, folded portions Z are formed. As shown in FIG. 8, the airbag is folded internally such that the upper and lower folds L and U and the folded portions Z are held between the upper outer portion 42Uout and the upper inner portion 42Uin of the airbag upper portion 42U.

As shown in FIG. 8, the inflator 50 is integrally provided with a pair of, namely, top and bottom attachment bolts 51 and 52 extending through the upper inner portion 42Uin of the airbag upper portion 42U and inward in the width direction of the vehicle. The inflator 50 is attached to the seat back side frame 32 as shown in FIG. 2 via nuts (not shown) tightened to the pair of attachment bolts 51 and 52. This way, the side airbag device 40 is built in the seat back 27 of the seat 25 for the vehicle.
As shown in the front view of FIG. 1, the airbag 42 is folded in the state where the overlap portion OL as an overlap area of the airbag upper portion 42U and the airbag lower portion 42L is located below a top surface of the armrest 20 projecting from the door trim 19 inward in the vehicle chamber 1.

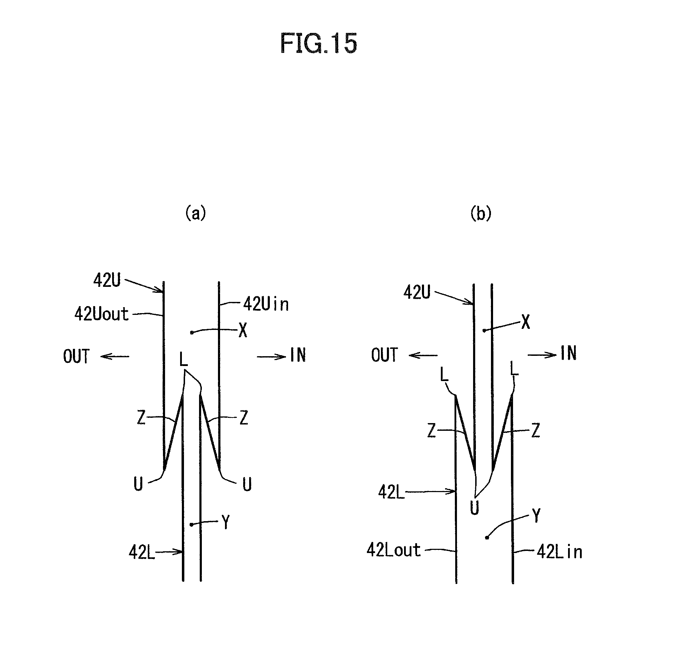

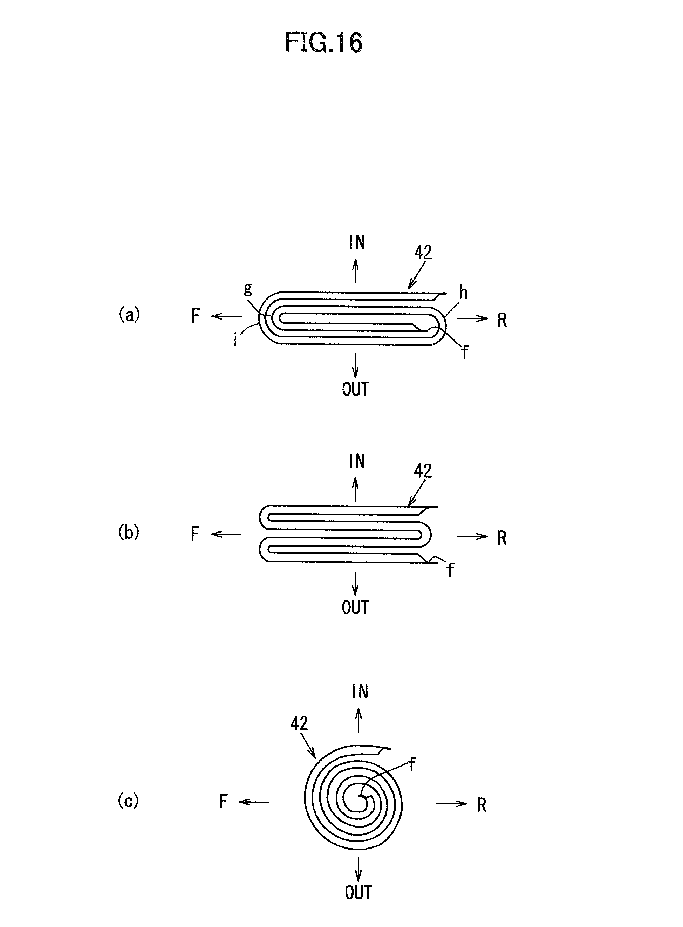

The folding structure of the airbag 42 in Embodiment 1 shown in FIG. 7 and FIG. 8 is as schematically shown in FIG. 15(a) and FIG. 16(a). As shown in FIG. 15(a), the airbag 42 is folded in the state where a major part of an inner path X of the airbag upper portion 42U and a major part of an inner path Y of the airbag lower portion 42L, excluding the folded portions c and the folded-in portions e (see FIG. 4), communicate to each other generally linearly in the top-bottom direction.

For the purpose of keeping the airbag 42 in the completely folded state shown in FIG. 7 until a crash occurs, the airbag 42 is held in this state by shape retaining means such as paper tape or the like, which can be easily broken when the airbag 42 is expanded and developed.
In the figures, arrow F represents the forward direction of the vehicle and arrow R represents the rearward direction of the vehicle. Arrow OUT represents the outward direction of the vehicle and arrow IN represents the inward direction of the vehicle.

As described above, the side airbag device in Embodiment 1 shown in FIGS. 1 through 8 (corresponding to claims 1, 2, 3, 6, 7, 10 and 11) is a side airbag device accommodated in a seat back 27 of a seat 25 for a vehicle. The side airbag device includes an airbag 42; and an inflator 50 for supplying gas to the airbag 42 to develop the airbag 42 at the time of a crash of the vehicle. The airbag 42 includes an airbag upper portion 42U including a bust guard portion A as a chest protection portion for protecting the chest of a passenger sitting on the seat 25 when the airbag 42 is developed and an airbag lower portion 42L including a waist guard portion B as a loin protection portion for protecting the loins of the passenger sitting on the seat 25 when the airbag 42 is developed. The airbag is accommodated in the state of being folded such that a bottom part of the airbag upper portion 42U and a top part of the airbag lower portion 42L overlap each other (see the overlap portion OL) in the width direction of the vehicle, and such that a bottom end j of the airbag lower portion 42L is located below a top end of the airbag lower portion 42L. (See FIGS. 1, 2, 3 and 7.)

According to this structure, the airbag is accommodated in the state of being folded such that the bottom part of the airbag upper portion 42U and the top part of the airbag lower portion 42L overlap each other in the width direction of the vehicle, and such that the bottom end j of the airbag lower portion 42L is located below the top end of the airbag lower portion 42L. Therefore, when the airbag 42 is expanded and developed, gas is supplied to the airbag 42 generally right downward, and the airbag lower portion 42L including the loin protection portion (see the waist guard portion B) is expanded generally right downward. This allows the loin protection portion (waist guard portion B) to be expanded and developed quickly. Hence, at the time of a side crash of the vehicle, the airbag 42 can be located as represented by the phantom line in FIG. 1 between the loins of the passenger and the door trim 19 with certainty to protect the passenger.
In summary, the loin protection portion (waist guard portion B) of the airbag 42 is required to have a function of being expanded and developed more quickly than the chest protection portion (bust guard portion A) and, at the time of a side crash, first urging the body of the passenger inward in the vehicle chamber 1. Such a requirement can be fulfilled by the above-described structure.

In the state where the airbag 42 is folded, the top end of the airbag lower portion 42L has first folds L extending generally in the front-rear direction of the seat; the bottom end of the airbag upper portion 42U has second folds U extending generally in the front-rear direction of the seat; and the first folds L are located above the second folds U (see FIG 7 and FIG 8).
According to this structure, since the first folds L are located above the second folds U, the bottom part of the airbag upper portion 42U and the top part of the airbag lower portion 42L overlap each other in the width direction of the vehicle. The bottom end j of the airbag lower portion 42L is located below the top end of the airbag lower portion 42L. Therefore, in the same manner as described above, when the airbag 42 is expanded and developed, gas is supplied to the airbag 42 generally right downward, and the airbag lower portion 42L including the loin protection portion (waist guard portion B) is expanded generally right downward. This allows the loin protection portion (waist guard portion B) to be expanded and developed quickly. Hence, at the time of a side crash, the airbag 42 can be located between the loins of the passenger and the door trim 19 with certainty.

In the state where the airbag 42 is folded, a front edge f of the airbag 42, which is located on the front side when the airbag 42 is developed, is turned toward the inflator 50, so that the airbag 42 has a shape lengthy in the top-bottom direction (see FIG. 6); the lengthy airbag upper portion 42U includes an upper outer portion 42Uout located on the outer side in the width direction of the vehicle and an upper inner portion 42Uin located on the inner side in the width direction of the vehicle; the top end of the airbag lower portion 42L has first folds L extending generally in the front-rear direction of the seat; the bottom end of the airbag upper portion 42U has second folds U extending generally in the front-rear direction of the seat; folded portions Z are formed between the first folds L and the second folds U; and the airbag 42 is folded internally such that the first folds L, the second folds U, and the folded portions Z are held between the upper outer portion 42Uout and the upper inner portion 42Uin (see FIGS. 3, 6, 7 and 8).
According to this structure, the airbag 42 is folded internally (put into an internally folded state) in the state where the folds L and U and the folded portions Z are held between the upper outer portion 42Uout and the upper inner portion 42Uin of the airbag upper portion 42U.

Even in the case where the airbag 42 is in such an internally folded state, when the airbag 42 is expanded and developed, gas is supplied to the airbag 42 generally right downward, and the airbag lower portion 42L including the loin protection portion (waist guard portion B) is expanded generally right downward. This allows the loin protection portion (waist guard portion B) to be expanded and developed quickly. Hence, at the time of a side crash, the airbag 42 can be located between the loins of the passenger and the door trim 19 with certainty.
In addition, the chest protection portion (bust guard portion A) and the loin protection portion (waist guard portion B) of the airbag 42 are partitioned from each other by a partition (seam 43) extending generally from front to rear in the state where the airbag is developed, except for a gas inlet of the inflator 50 and the vicinity thereof (see FIG. 3).

It is desirable that the volume of the loin protection portion (waist guard portion B) partitioned by the partition (seam 43) is smaller than the volume of the chest protection portion (bust guard portion A).
According to this structure, the chest protection portion (bust guard portion A) and the loin protection portion (waist guard portion B) of the airbag 42 are partitioned from each other by the partition (seam 43). Therefore, gas from the inflator 50 can be concentratedly supplied to the loin protection portion (waist guard portion B), and thus the loin protection portion (waist guard portion B) can be expanded and developed more quickly. In other words, the loin protection portion can be expanded and developed with priority.

The door trim 19 located to the side of the seat 25 includes an armrest 20 projecting inward in the vehicle chamber 1; and the airbag 42 is folded in the state where the overlap area (overlap portion OL) of the airbag upper portion 42U and the airbag lower portion 42L is located below a top surface of the armrest 20 (see FIG. 1).
According to this structure, the loin protection portion (waist guard portion B) of the airbag 42 can be expanded and developed between the armrest 20 and the loins of the passenger. Therefore, even on a side surface of the armrest 20 of the door trim 19 projecting inward in the vehicle chamber 1, the loin protection portion (waist guard portion B) can be developed quickly.

Especially because the overlap area (overlap portion OL) is located below the top surface of the armrest 20, the loin protection portion (waist guard portion B) is developed below the top surface of the armrest 20. Thus, the loin protection portion (waist guard portion B) can be developed between the armrest 20 and the seat 25 with certainty.

Also, the loin protection portion (waist guard portion B) of the airbag 42 can be expanded and developed between the seat 25 and a space which is below the armrest 20 and projects more outward, in the width direction of the vehicle, with respect to the inner end of the armrest 20 in the width direction of the vehicle.

A side airbag device in Embodiment 1 described above is a side airbag device accommodated in a seat back 27 of a seat 25 for a vehicle. The side airbag device includes an airbag 42; and an inflator 50 for supplying gas to the airbag 42 to develop the airbag 42 at the time of a crash of the vehicle. The airbag 42 includes an airbag upper portion 42U including a chest protection portion (bust guard portion A) for protecting the chest of a passenger sitting on the seat 25 when the airbag 42 is developed and an airbag lower portion 42L including a loin protection portion (waist guard portion B) for protecting the loins of the passenger sitting on the seat 25 when the airbag 42 is developed. The airbag 42 is folded in the state where an inner path X of the airbag upper portion 42U and an inner path Y of the airbag lower portion 42L communicate to each other generally linearly in the top-bottom direction. (See FIGS. 1, 3 and 15(a).)

According to this structure, the airbag 42 is folded in the state where the inner path X of the airbag upper portion 42U and the inner path Y of the airbag lower portion 42L communicate to each other generally linearly in the top-bottom direction. Therefore, when the airbag 42 is expanded and developed, gas is supplied to the airbag 42 generally right downward, and the airbag lower portion 42L including the loin protection portion (waist guard portion B) is expanded generally right downward. This allows the loin protection portion (waist guard portion B) to be expanded and developed quickly. Hence, at the time of a side crash of the vehicle, the airbag 42 can be located between the loins of the passenger and the door trim 19 with certainty to protect the passenger.

A method for folding a bag section (airbag 42) of a side airbag device in Embodiment 1 described above is a method for folding a bag section of a side airbag device including an airbag upper portion 42U including a chest protection portion (bust guard portion A) for protecting the chest of a passenger sitting on a seat 25 when the bag section is developed and an airbag lower portion 42L including a loin protection portion (waist protection portion B) for protecting the loins of the passenger sitting on the seat 25 when the bag section is developed. The method includes a first step (see FIG. 6) of turning a front edge f of the bag section (airbag 42), which is located on the front side in the vehicle when the bag section is developed, toward an inflator 50 located on the rear side of the vehicle when the bag section is developed, so that the bag section (airbag 42) has a lengthy shape; and a second step (see FIG. 7) of folding the bag section such that a bottom part of the airbag upper portion 42U and a top part of the airbag lower portion 42L overlap each other (overlap portion OL) in a width direction of the vehicle, and such that a bottom end j of the airbag lower portion 42L is located below a top end of the airbag lower portion 42L. (See FIGS. 3, 6 and 7.)

According to this structure, in the first step (see FIG. 6), the front edge f of the bag section (airbag 42) is turned toward the inflator 50, and thus the bag section (airbag 42) has a lengthy shape. In the second step (see FIG. 7), the bag section is folded such that the bottom part of the airbag upper portion 42U and the top part of the airbag lower portion 42L overlap each other (overlap portion OL) in the width direction of the vehicle, and such that the bottom end j of the airbag lower portion 42L is located below the top end of the airbag lower portion 42L.

As described above, the bag section is folded such that the bottom part of the airbag upper portion 42U and the top part of the airbag lower portion 42L overlap each other in the width direction of the vehicle, and such that the bottom end j of the airbag lower portion 42L is located below the top end of the airbag lower portion 42L. Therefore, when the airbag 42 is expanded and developed, gas is supplied to the airbag 42 generally right downward, and the airbag lower portion 42L including the loin protection portion (see waist guard portion B) is expanded generally right downward. This allows the loin protection portion (waist guard portion B) to be expanded and developed quickly. Hence, at the time of a side crash of the vehicle, the airbag 42 can be located between the loins of the passenger and the door trim 19 with certainty to protect the passenger.
In summary, the loin protection portion (waist guard portion B) of the airbag 42 is required to have a function of being expanded and developed more quickly than the chest protection portion (bust guard portion A) and, at the time of a side crash, first urging the body of the passenger inward in the vehicle chamber 1. Such a requirement can be fulfilled by the above-described folding method.

In the case where as disclosed in the embodiment (see FIG. 4), the top end a of the airbag upper portion 42U is turned downward along the fold line b to form the folded portion c and the bottom part of the airbag lower portion 42L is folded along the fold line d and inserted between the two cloth pieces forming the airbag 42 to form the folded-in portion e, the length in the top-bottom direction of the airbag 42 in the folded state can be made shorter.

Regarding the method for folding the bag section (airbag 42), in Embodiment 1, the front edge f, of the bag section, which is located on the front side of the vehicle when the bag section is developed, is turned toward the inflator 50 and the bag section is sequentially folded into a generally roll-like shape as shown in FIG. 16(a). Alternatively, the bag section may be folded as shown in FIG. 16(b) or (c).
Specifically, in FIG. 16(b), the airbag 42 is folded in a zigzag manner. In FIG. 16(c), the front edge f, of the airbag 42, which is located on the front side of the vehicle when the airbag 42 is developed, is turned toward the inflator 50 so that the airbag 42 has a shape of generally complete roll, namely, a whirlpool-like shape.

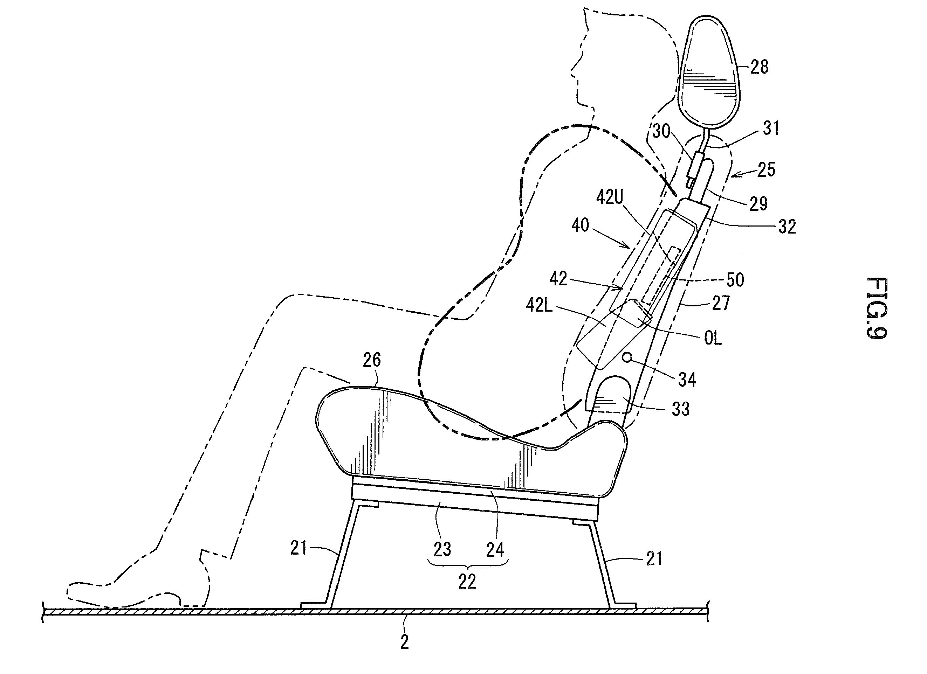

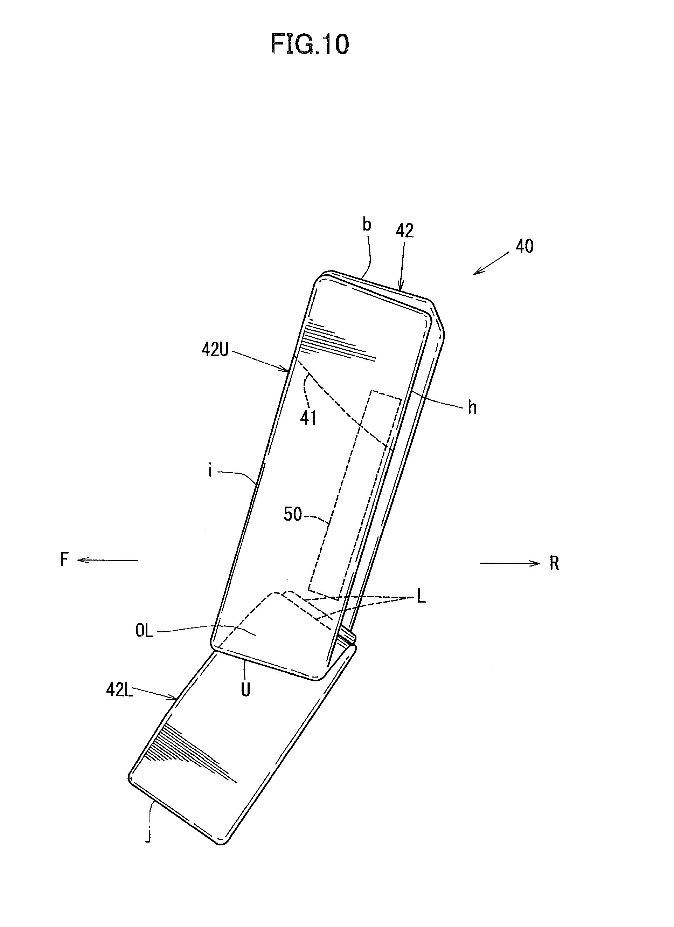

Instead of the side airbag device shown in FIG. 2 and FIG. 7, a side airbag device shown in FIG. 9 and FIG. 10 may be adopted. According to the structure shown in FIG. 10, the first folds L provided at the top end of the airbag lower portion 42L are inclined at an acute angle (e.g., 25 to 35 degrees with respect to the phantom horizontal line) so as to have a higher front end and a lower rear end. When the first folds L are set to be inclined at such an acute angle, a part lower than the first folds L is directed forward in the vehicle. Therefore, as shown in FIG. 9, when the airbag 42 is attached to the seat back side frame 32, the airbag lower portion 42L does not overlap the lumbar shaft 34.

Therefore, according to the structure shown in FIG. 9 and FIG. 10, the side airbag and a lumbar support device can both be provided.
Even with the structure shown in FIG. 9 and FIG. 10, the other elements of the structure, the function and the effect are substantially the same as those in the above-described embodiment. Therefore, in FIG. 9 and FIG. 10, identical elements as those in the previously described figures bear the identical reference signs thereto and detailed descriptions thereof are omitted.

### EMBODIMENT 2

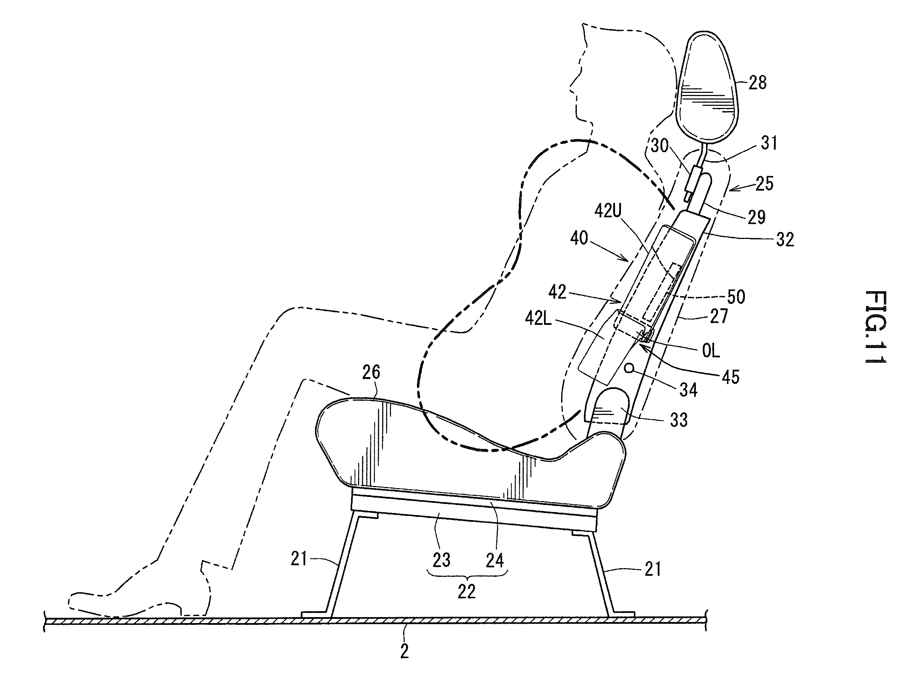

FIG. 11, FIG. 12 and FIG. 13 show another embodiment of a side airbag device 40.
In Embodiment 1 shown in FIGS. 1 through 10, the airbag lower portion 42L is folded internally; whereas in Embodiment 2 shown in FIG. 11, FIG. 12 and FIG. 13, the airbag lower portion 42L is folded externally.

The method for folding the bag section (airbag 42) is the same as that of Embodiment 1 until the bag section is formed into a shape lengthy in the top-bottom direction as shown in FIG. 6 from the pre-folded state in FIG. 3 via the intermediate states in FIG. 4 and FIG. 5.

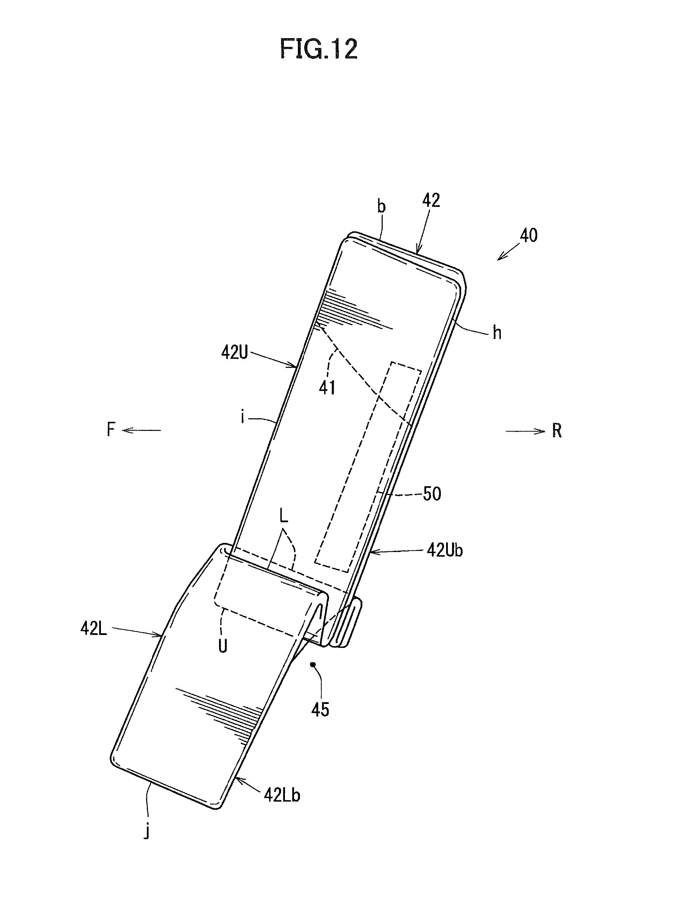

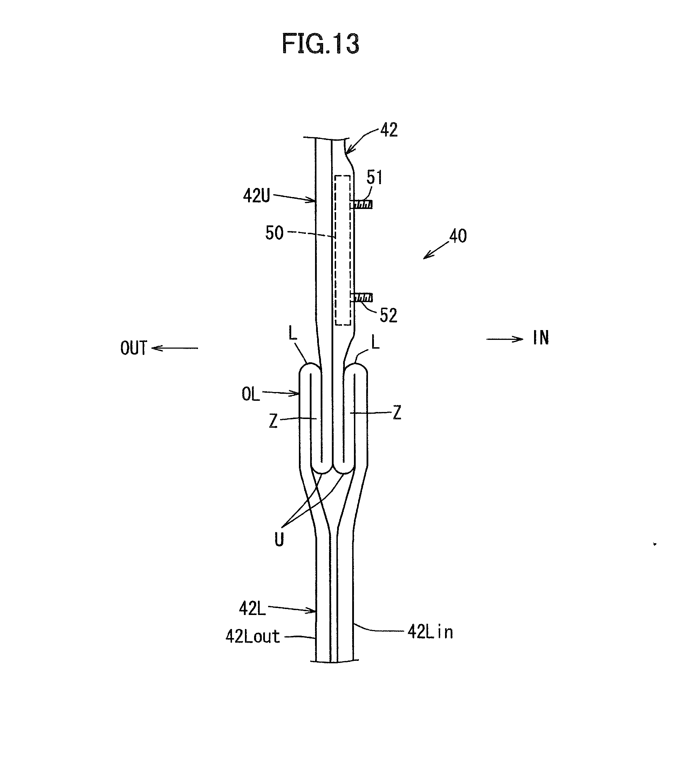

In Embodiment 2, after being formed into the shape lengthy in the top-bottom direction shown in FIG. 6, the airbag 42 is folded as shown in FIG. 12 and FIG. 13.
The lengthy airbag lower portion 42L includes a lower outer portion 42Lout located on the outer side in the width direction of the vehicle and a lower inner portion 42Lin located on the inner side in the width direction of the vehicle. The top end of each of the lower outer portion 42Lout and the lower inner portion 42Lin has a first fold L extending generally in the front-rear direction of the seat 25, and the bottom end of the airbag upper portion 42U has two second folds U extending generally in the front-rear direction of the seat 25. Between the first folds L and the second folds U, an outer folded portion Z and an inner folded portion Z are formed.

In Embodiment 2 shown in FIG. 12 and FIG. 13, the airbag is folded externally (put into an externally folded state) such that the folded portion Z of the lower outer portion 42Lout, the folded portion Z of the lower inner portion 42Lin, and the two first folds L are located outside the airbag upper portion 42U. In this folded state, a portion between the first folds L located above and the second folds U located below act as the overlap portion OL.
In other words, after the first step shown in FIGS. 3 through 6, the airbag is folded externally such that the bottom part of the airbag upper portion 42U and the top part of the airbag lower portion 42L overlap each other in the width direction of the vehicle to form the overlap portion OL, and such that the bottom end j of the airbag lower portion 42L is located below the top end (see the first folds L) of the airbag lower portion 42L (second step). Thus, the state shown in FIG. 12 and FIG. 13 is provided.

FIG. 12 is an enlarged side view of the side airbag device 40 when being accommodated in the seat back 27. In the example of Embodiment 2 shown in FIGS. 11 through 13, the airbag is folded such that a rear edge 42Ub of the airbag upper portion 42U is located rear to a rear edge 42Lb of the airbag lower portion 42L in the front-rear direction of the vehicle. Between the rear edge 42Ub of the airbag upper portion 42U and the rear edge 42Lb of the airbag lower portion 42L, a step 45 is formed generally in the front-rear direction of the seat 25.

The folding structure of the airbag 42 in Embodiment 2 shown in FIGS. 11 through 13 is as schematically shown in FIG. 15(b) and FIG. 16(a). As shown in FIG. 15(b), the airbag 42 is folded such that a major part of an inner path X of the airbag upper portion 42U and a major part of an inner path Y of the airbag lower portion 42L, excluding the folded portions c and the folded-in portions e (see FIG. 4), communicate to each other generally linearly in the top-bottom direction.

As described above, in Embodiment 2 shown in FIGS. 11 through 13 (corresponding to claims 1, 2, 4, 6, 7, 8, 10 and 11), in the state where the airbag 42 is folded, a front edge f of the airbag (see FIG. 3), which is located on the front side when the airbag is developed, is turned toward the inflator 50, so that the airbag has a shape lengthy in the top-bottom direction (see FIG. 6); the lengthy airbag lower portion 42L includes a lower outer portion (42Lout) located on the outer side in the width direction of the vehicle and a lower inner portion (42Lin) located on the inner side in the width direction of the vehicle; the top end of each of the lower outer portion 42Lout and the lower inner portion 42Lin has a first fold L extending generally in the front-rear direction of the seat 25; the bottom end of the airbag upper portion 42U has second folds U extending generally in the front-rear direction of the seat 25; folded portions Z are formed between the first folds L and the second folds U; and the airbag 42 is folded externally such that the folded portion Z of the lower outer portion 42Lout and the folded portion Z of the lower inner portion 42Lin are located outside the airbag upper portion 42U (see FIGS. 1, 6 and 11 through 13).
According to this structure, the airbag 42 is folded externally (put into an externally folded state) such that the folded portion Z of the lower outer portion 42Lout and the folded portion Z of the lower inner portion 42Lin are located outside the airbag upper portion 42U.

Even in the case where the airbag 42 is in such an externally folded state, when the airbag 42 is expanded and developed, gas is supplied to the airbag 42 generally right downward, and the airbag lower portion 42L including the loin protection portion (waist guard portion B) is expanded generally right downward. This allows the loin protection portion (waist guard portion B) to be expanded and developed quickly. Hence, at the time of a side crash, the airbag 42 can be located between the loins of the passenger and the door trim 19 with certainty.

In addition, in this embodiment shown in FIGS. 11 through 13, in the state where the side airbag device 40 is accommodated in the seat back 27, the airbag 42 is folded such that the rear edge 42Ub of the airbag upper portion 42U is located rear to the rear edge 42Lb of the airbag lower portion 42L. Thus, the step 45 is formed generally in the front-rear direction of the seat between the rear edge 42Ub of the airbag upper portion 42U and the rear edge 42Lb of the airbag lower portion 42L. (See FIG. 11 and FIG. 12.)

This structure has the following effects.
When the airbag lower portion 42L is merely folded upward, the step 45 is not formed. When the airbag is folded such that the rear edge 42Ub of the airbag upper portion 42U is located rear to the rear edge 42Lb of the airbag lower portion 42L as in the above-described structure, the step 45 can be formed between the rear edges 42Ub and 42Lb. This step 45 can be effectively used.
For example, in the case where the lumbar shaft 34 is provided as shown in FIG. 11 by effective use of the step 45, the side airbag and the lumbar support device can both be provided.

In Embodiment 2 shown in FIGS. 11 through 13 also, the other elements of the structure, the function and the effect are substantially the same as those in the above-described embodiment. Therefore, in FIGS. 11 through 13, identical elements as those in the previously described figures bear the identical reference signs thereto and detailed descriptions thereof are omitted.

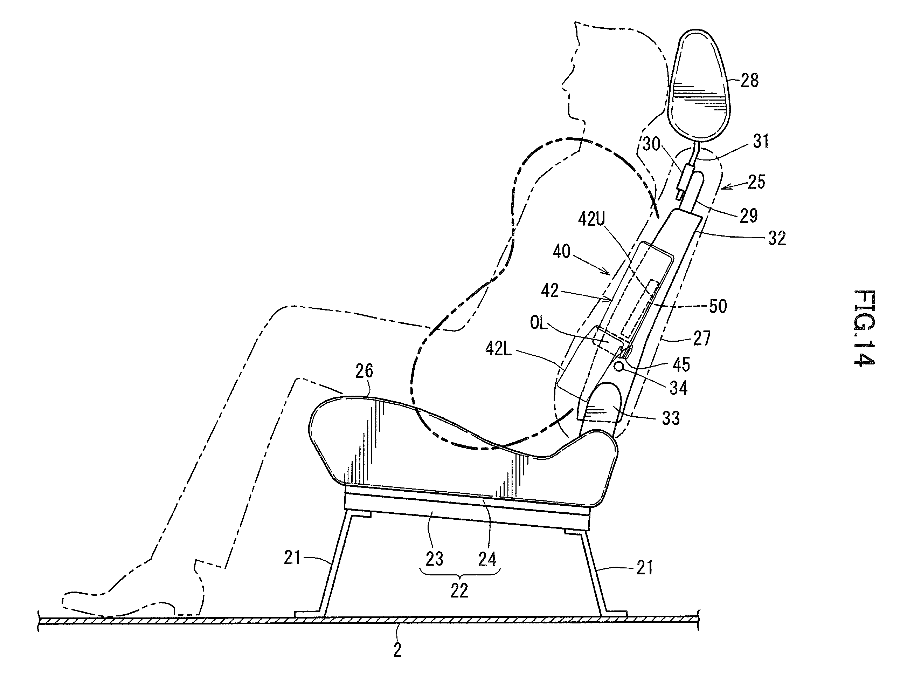

Instead of the structure shown in FIG. 11, the structure shown in FIG. 14 may be adopted.
According to the structure shown in FIG. 14, the second folds U formed at the bottom end of the airbag upper portion 42U and extending generally in the front-rear direction of the seat is lowered to a position close to the lumbar shaft 34, so that the lumbar shaft 34 is provided by effective use of the step 45, and also the inflator 50 in the airbag 42 is provided at a position as low as possible of the seat back side frame 32.

In the embodiment shown in FIG. 14 (corresponding to claim 9), the inflator 50 is provided at a lower position of the seat back side frame 32, and the airbag 42 is folded in the state where the top end a (see FIG. 4) of the airbag upper portion 42U is turned downward as described above (see FIG. 4 and FIG. 14).
According to this structure, since the inflator 50 is provided at a lower position of the seat back side frame 32, an upper part of the seat back side frame 32 can be made thinner and also the inflator 50 having rigidity does not contact the chest of the passenger at the time of a side crash.

In addition, since the inflator 50 is provided at a lower position, gas can be provided more quickly from the inflator 50 to the loin protection portion (waist guard portion B). Since the top end a of the airbag upper portion 42U is turned downward, the loin protection portion (waist guard portion B) is expanded and developed more quickly than the chest protection portion (bust guard portion A) with certainty. This allows the loin protection portion (waist guard portion B) to be expanded and developed quickly. By contrast, the chest protection portion (bust guard portion A) is developed after the loin protection portion (waist guard portion B), and therefore can receive the body of the passenger softly.
Since the chest of the passenger is weaker than the loins of the passenger, it is required to alleviate the impact against the chest at the time of the development of the airbag 42. This requirement can be fulfilled by the above-described structure.

In the embodiment shown in FIG. 14 also, the other elements of the structure, the function and the effect are substantially the same as those in FIGS. 11 through 13. Therefore, in FIG. 14, identical elements as those in FIGS. 11 through 13 bear the identical reference signs thereto and detailed descriptions thereof are omitted.

### EMBODIMENT 3

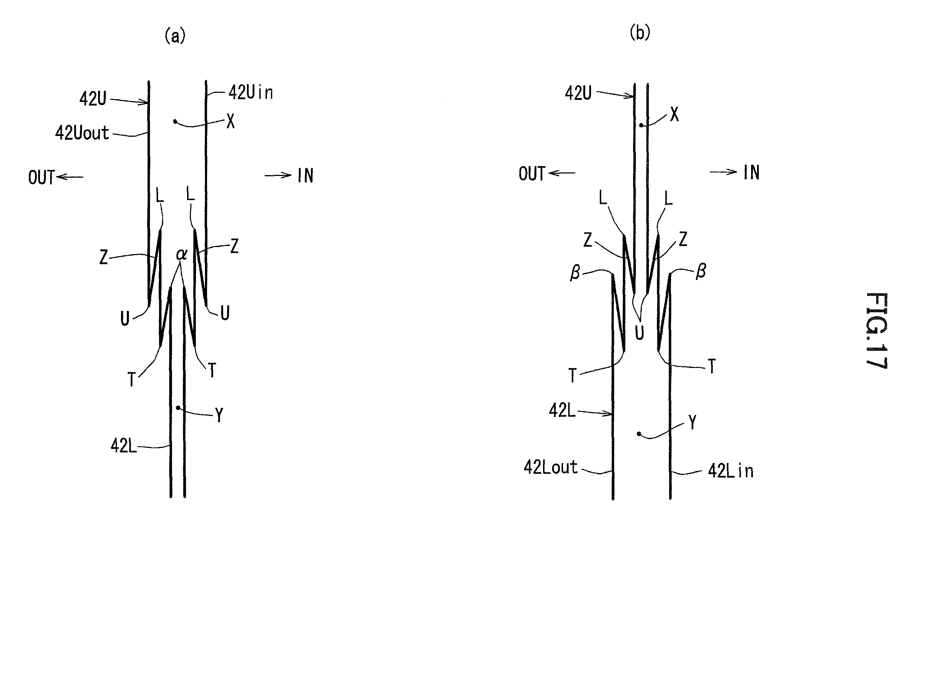

FIGS. 17(a) and (b) show still another embodiment of side airbag device. In both of the examples, in the bottom part of the waist guard portion B as the loin protection portion, third folds T are located below the first folds L and the second folds U and extend generally in the front-rear direction of the seat 25. Parts α or β of the wait guard portion B, which are located below the third folds T when the airbag 42 is developed, are folded internally (put into an internally folded state) as shown in FIG. 17(a) or externally (put into an externally folded state) as shown in FIG. 17(b).

In the internally folded state shown in FIG. 17(a), the airbag 42 is folded such that the second folds U, the folded portions Z, the first folds L, the third folds T and the above-mentioned parts α are located between the upper outer portion 42Uout and the upper inner portion 42Uin of the airbag upper portion 42U. Thus, the airbag 42 is shaped like a bamboo shoot.
In the externally folded state shown in FIG. 17(b), the airbag 42 is folded such that the folded portions Z, the first folds L, the third folds T, the above-mentioned parts β, and the lower outer portion 42Lout and the lower inner portion 42Lin of the airbag lower portion 42L are located outside the airbag upper portion 42U. Thus, the airbag 42 is shaped like a bamboo shoot.

As described above, in Embodiment 3 shown in FIGS. 17(a) and (b) (corresponding to claim 5), third folds T located below the first folds L and extending generally in the front-rear direction of the seat 25 are provided in the bottom part of the loin protection portion (waist guard portion B); and parts α or β, of the loin protection portion, which are located below the third folds T when the airbag is developed, are folded (see FIG. 17) internally (see FIG. 17, a) or externally (see FIG. 17, b).

According to this structure, the third folds T are provided, and the parts α or β of the loin protection portion, which are located below the third folds T when the airbag is developed, are folded internally or externally. Therefore, the size in the top-bottom direction of the airbag 42 in the folded state can be decreased, and neither the third folds T nor the parts α and β of the loin protection portion inhibit the airbag from being developed.

In addition, the bottom part of the loin protection portion (waist guard portion B) is also folded internally (see FIG. 17, a) or externally (see FIG. 17, b). Therefore, the bottom part of the loin protection portion (waist guard portion B) is expanded and developed generally right downward by the pressure of gas from the inflator 50. Thus, the loin protection portion (waist guard portion B) is expanded and developed more quickly.
In FIG. 17, identical elements as those in FIG. 15 bear the identical reference signs thereto and detailed descriptions thereof are omitted.

### EMBODIMENT 4

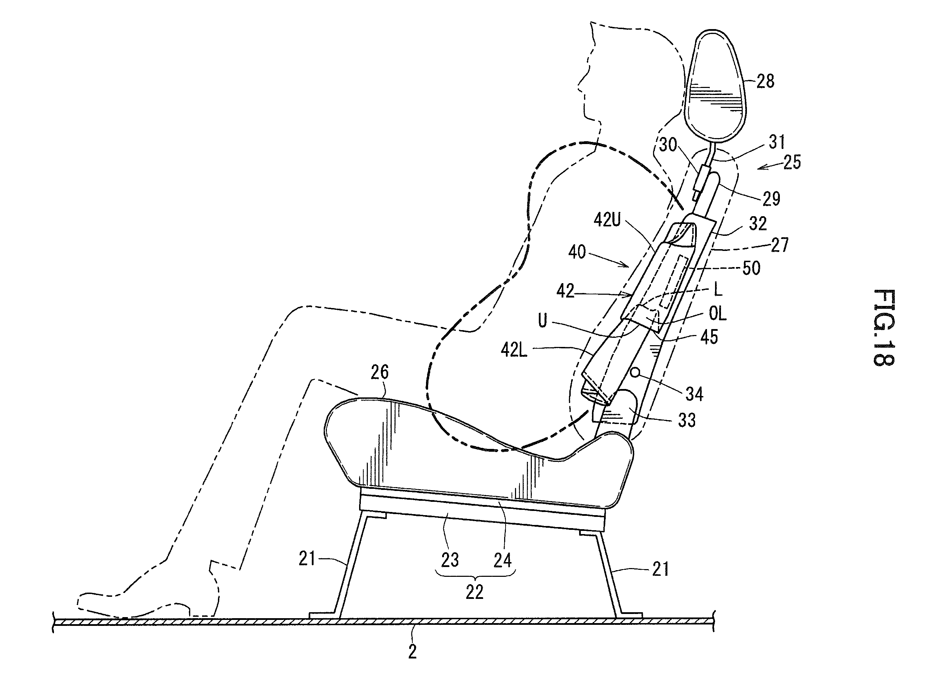

FIGS. 18 through 23 show still another embodiment of side airbag device.
FIGS. 18 through 23 also show an internally folded structure, but the structure shown in FIGS. 18 through 24 is different from that of Embodiment 1 shown in FIGS. 3 through 7 in the method of folding the airbag 42.

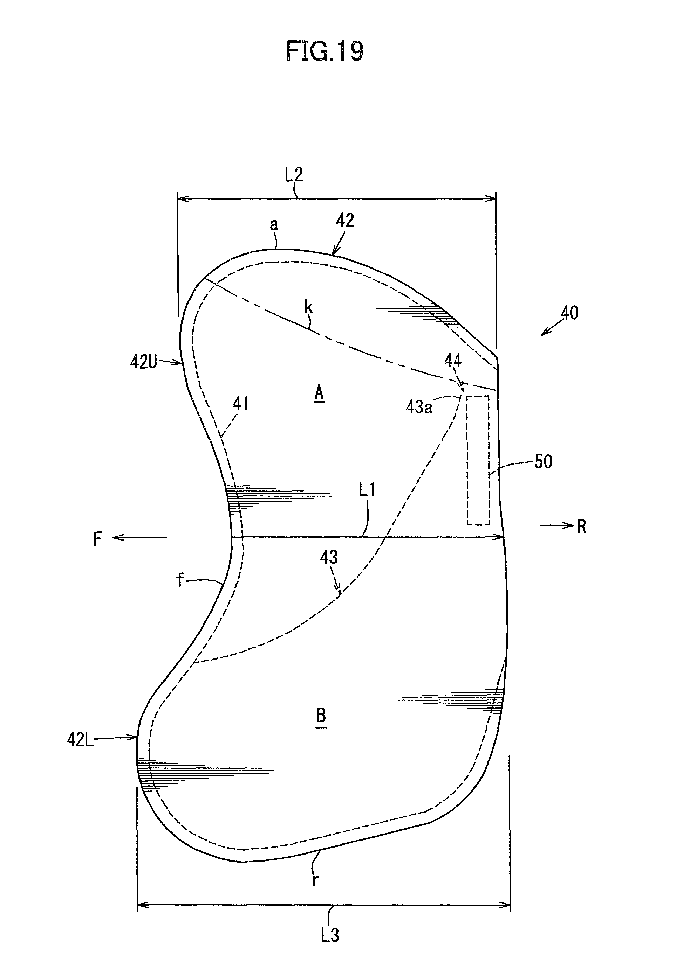

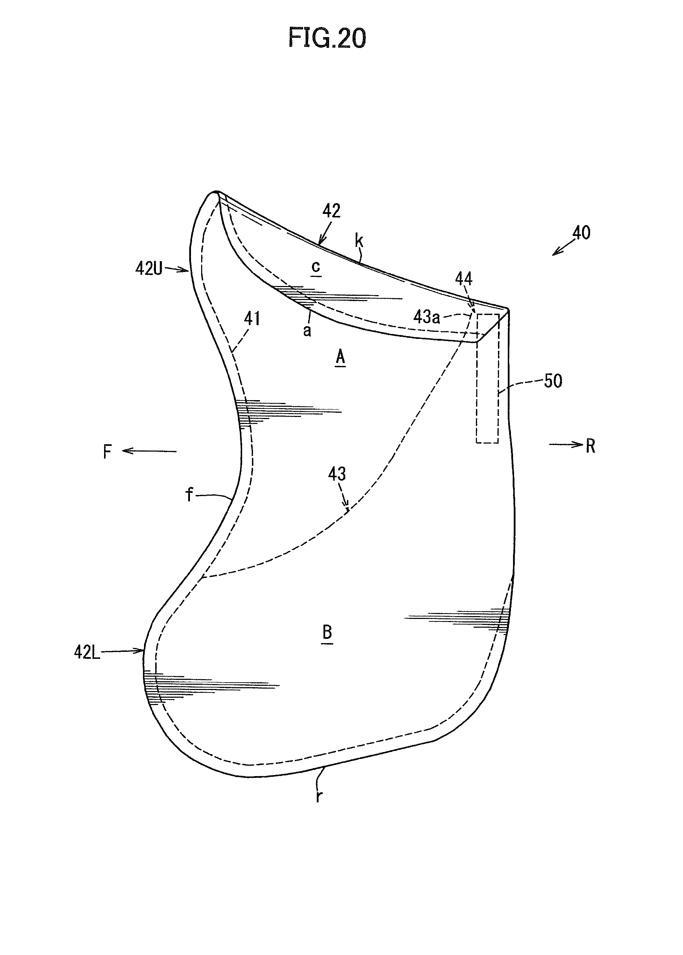

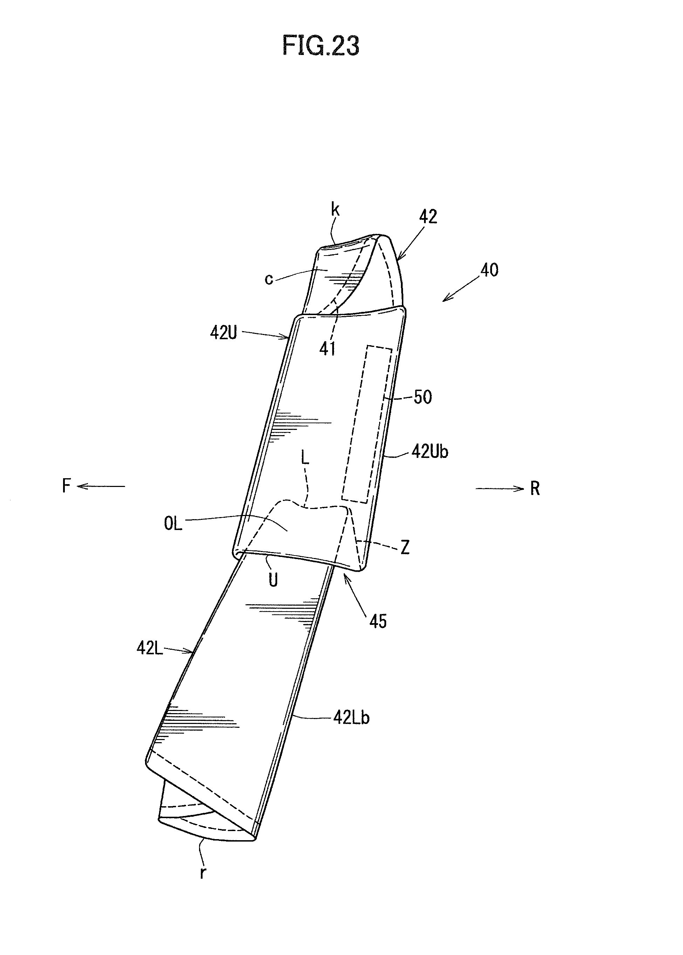

A bag section folding method for folding the airbag 42 in a pre-folded state shown in FIG. 19 into a state shown in FIG. 23 will be described.
As shown in FIG. 19 and FIG. 20, a top end a of the airbag upper portion 42U is turned downward along a fold line k to form a folded portion c. The fold line b shown in FIG. 3 is generally horizontal, whereas the fold line k is inclined so as to have a higher front end and a lower rear end.

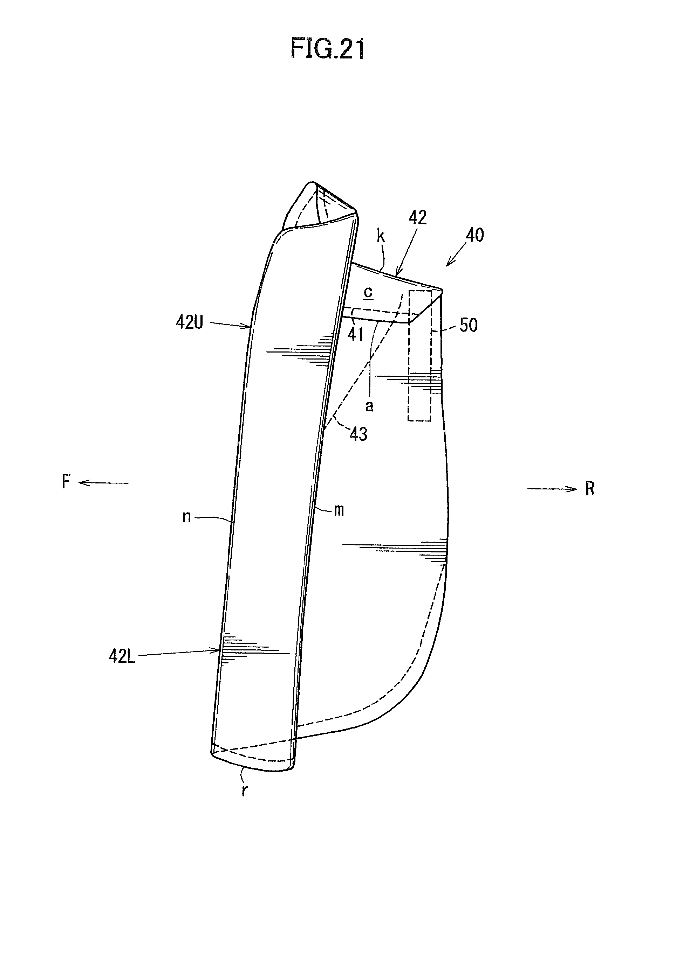

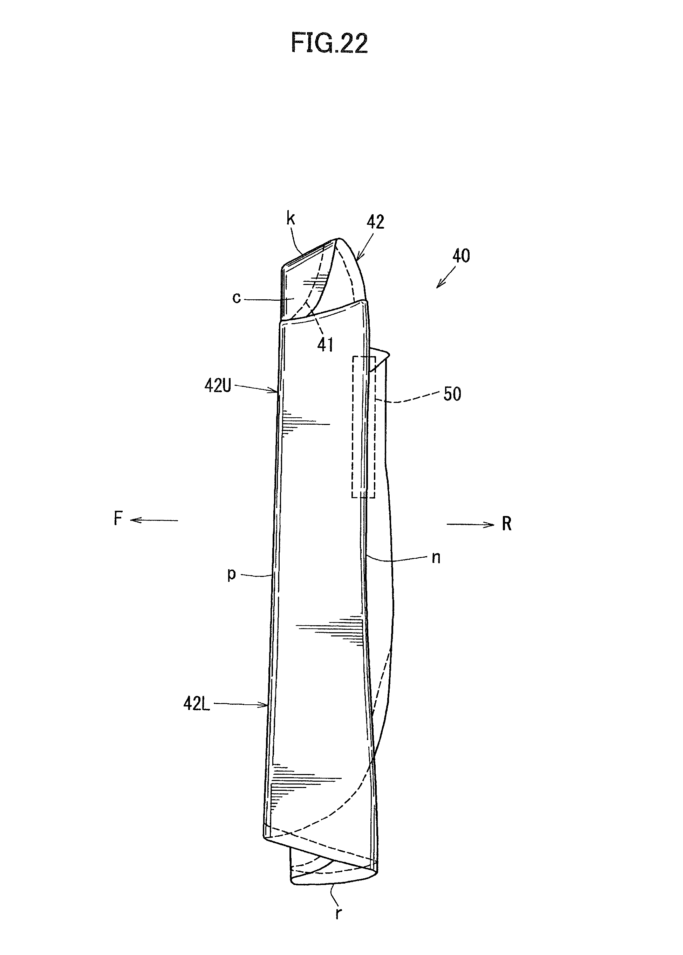

Next, from the state shown in FIG. 20, a front edge f of the airbag 42, which is located on the front side when the airbag 42 is developed, is turned toward the inflator 50 sequentially along fold lines n, m and p extending in the top-bottom direction (see FIG. 21 and FIG. 22). Thus, the airbag 42 is first put into an intermediate state shown in FIG. 21 and then is put into a lengthy shape as shown in FIG. 22 (first step).

Next, from the state shown in FIG. 22, the airbag 42 is folded as shown in FIG. 23 such that a bottom part of the airbag upper portion 42U and a top part of the airbag lower portion 42L overlap each other in the width direction of the vehicle to form an overlap portion OL, and such that a bottom end r of the airbag lower portion 42L is located below a top end of the airbag lower portion 42L (second step).

FIG. 23 is a side view of the airbag 42 in the folded state, and FIG. 15(a) is a schematic view thereof. As shown in FIG. 23 and FIG. 15(a), in the folded state of the airbag 42, the top end of the airbag lower portion 42L has two first folds L extending generally in the front-rear direction of the seat 25, and a bottom end of the airbag upper portion 42U has two second folds U extending generally in the front-rear direction of the seat 25. The first folds L are located above the second folds U, and a portion between the first folds L and the second folds U is an overlap portion OL.

In Embodiment 4 shown in FIG. 23 and FIG. 15(a), the airbag 42 is folded internally (put into an internally folded state), and therefore the details of the folded state of the airbag 42 are as follows.
As shown in FIG. 15(a), the lengthy airbag upper portion 42U includes an upper outer portion 42Uout located on the outer side in the width direction of the vehicle and an upper inner portion 42Uin located on the inner side in the width direction of the vehicle. Between the first folds L and the second folds U, folded portions Z are formed. As shown in FIG. 15(a), the airbag is folded internally such that the upper and lower folds L and U and the folded portions Z are held between the upper outer portion 42Uout and the upper inner portion 42Uin of the airbag upper portion 42U.

The inflator 50 is integrally provided with a pair of, namely, top and bottom attachment bolts (see the figure above) extending through the upper inner portion 42Uin of the airbag upper portion 42U and inward in the width direction of the vehicle. The inflator 50 is attached to the seat back side frame 32 as shown in FIG. 18 via nuts tightened to the pair of attachment bolts. This way, the side airbag device 40 is built in the seat back 27 of the seat 25 for the vehicle.
In addition, as shown in FIG. 23, the airbag 42 is folded internally such that a rear edge 42Ub of the airbag upper portion 42U is located rear to a rear edge 42Lb of the airbag lower portion 42L in the front-rear direction of the vehicle. Between the rear edge 42Ub of the airbag upper portion 42U and the rear edge 42Lb of the airbag lower portion 42L, a step 45 is formed generally in the front-rear direction of the seat 25. Thus, as shown in FIG. 18, the airbag lower portion 42L is located so as not to interfere with the lumbar shaft 34.

As described above, the side airbag device in Embodiment 4 shown in FIGS. 18 through 23 and 15(a) (corresponding to claims 1, 2, 3, 6, 7, 8, 9, 10 and 11) is a side airbag device accommodated in a seat back 27 of a seat 25 for a vehicle. The side airbag device includes an airbag 42; and an inflator 50 for supplying gas to the airbag 42 to develop the airbag 42 at the time of a crash of the vehicle. The airbag 42 includes an airbag upper portion 42U including a chest protection portion (bust guard portion A) for protecting the chest of a passenger sitting on the seat 25 when the airbag 42 is developed and an airbag lower portion 42L including a loin protection portion (waist guard portion B) for protecting the loins of the passenger sitting on the seat 25 when the airbag 42 is developed. The airbag is accommodated in the state of being folded such that a bottom part of the airbag upper portion 42U and a top part of the airbag lower portion 42L overlap each other (overlap portion OL) in the width direction of the vehicle, and such that a bottom end r of the airbag lower portion 42L is located below a top end of the airbag lower portion 42L. (See FIGS. 18, 19 and 23.)

According to this structure, the airbag is accommodated in the state of being folded such that the bottom part of the airbag upper portion 42U and the top part of the airbag lower portion 42L overlap each other in the width direction of the vehicle, and such that the bottom end r of the airbag lower portion 42L is located below the top end of the airbag lower portion 42L. Therefore, when the airbag 42 is expanded and developed, gas is supplied to the airbag 42 generally right downward, and the airbag lower portion 42L including the loin protection portion (waist guard portion B) is expanded generally right downward. This allows the loin protection portion to be expanded and developed quickly. Hence, at the time of a side crash of the vehicle, the airbag 42 can be located between the loins of the passenger and the door trim 19 (see FIG. 1) with certainty to protect the passenger.
In summary, the loin protection portion (waist guard portion B) of the airbag 42 is required to have a function of being expanded and developed more quickly than the chest protection portion (bust guard portion A) and, at the time of a side crash, first urging the body of the passenger (especially, the loins) inward in the vehicle chamber. Such a requirement can be fulfilled by the above-described structure.

In the state where the airbag 42 is folded, the top end of the airbag lower portion 42L has first folds L extending generally in the front-rear direction of the seat; the bottom end of the airbag upper portion 42U has second folds U extending generally in the front-rear direction of the seat; and the first folds L are located above the second folds U (see FIG 23).

According to this structure, since the first folds L are located above the second folds U, the bottom part of the airbag upper portion 42U and the top part of the airbag lower portion 42L overlap each other in the width direction of the vehicle. The bottom end r of the airbag lower portion 42L is located below the top end of the airbag lower portion 42L. Therefore, in the same manner as described above, when the airbag 42 is expanded and developed, gas is supplied to the airbag 42 generally right downward, and the airbag lower portion 42L including the loin protection portion (waist guard portion B) is expanded generally right downward. This allows the loin protection portion to be expanded and developed quickly. Hence, at the time of a side crash, the airbag can be located between the loins of the passenger and the door trim 19 with certainty.

In the state where the airbag 42 is folded, a front edge f of the airbag 42, which is located on the front side when the airbag 42 is developed, is turned toward the inflator 50, so that the airbag 42 has a shape lengthy in the top-bottom direction (see FIG. 22); the lengthy airbag upper portion 42U includes an upper outer portion 42Uout located on the outer side in the width direction of the vehicle and an upper inner portion 42Uin located on the inner side in the width direction of the vehicle; the top end of the airbag lower portion 42L has first folds L extending generally in the front-rear direction of the seat; the bottom end of the airbag upper portion 42U has second folds U extending generally in the front-rear direction of the seat; folded portions Z are formed between the first folds L and the second folds U; and the airbag 42 is folded internally such that the first folds L, the second folds U, and the folded portions Z are held between the upper outer portion 42Uout and the upper inner portion 42Uin (see FIGS. 19, 22 and 15(a)).

According to this structure, the airbag 42 is folded internally (put into an internally folded state) in the state where the folds L and U and the folded portions Z are held between the upper outer portion 42Uout and the upper inner portion 42Uin of the airbag upper portion 42U.

Even in the case where the airbag 42 is in such an internally folded state, when the airbag 42 is expanded and developed, gas is supplied to the airbag 42 generally right downward, and the airbag lower portion 42L including the loin protection portion (waist guard portion B) is expanded generally right downward. This allows the loin protection portion to be expanded and developed quickly. Hence, at the time of a side crash, the airbag 42 can be located between the loins of the passenger and the door trim 19 with certainty.

In addition, in the state where the side airbag device 40 is accommodated in the seat back 27, the airbag is folded such that the rear edge 42Ub of the airbag upper portion 42U is located rear to the rear edge 42Lb of the airbag lower portion 42L. Thus, the step 45 is formed generally in the front-rear direction of the seat between the rear edge 42Ub of the airbag upper portion 42U and the rear edge 42Lb of the airbag lower portion 42L. (See FIG. 18 and FIG. 23.)

This structure has the following effects.
When the airbag lower portion 42L is merely folded upward, the step 45 is not formed. When the airbag is folded such that the rear edge 42Ub of the airbag upper portion 42U is located rear to the rear edge 42Lb of the airbag lower portion 42L as in the above-described structure, the step 45 can be formed between the rear edges 42Ub and 42Lb. This step 45 can be effectively used.

A side airbag device in Embodiment 4 described above is a side airbag device 40 accommodated in a seat back 27 of a seat 25 for a vehicle. The side airbag device 40 includes an airbag 42; and an inflator 50 for supplying gas to the airbag 42 to develop the airbag 42 at the time of a crash of the vehicle. The airbag 42 includes an airbag upper portion 42U including a chest protection portion (bust guard portion A) for protecting the chest of a passenger sitting on the seat 25 when the airbag 42 is developed and an airbag lower portion 42L including a loin protection portion (waist guard portion B) for protecting the loins of the passenger sitting on the seat 25 when the airbag 42 is developed. The airbag 42 is folded in the state where an inner path X of the airbag upper portion 42U and an inner path Y of the airbag lower portion 42L communicate to each other generally linearly in the top-bottom direction. (See FIGS. 18 and 15(a).)

According to this structure, the airbag 42 is folded in the state where the inner path X of the airbag upper portion 42U and the inner path Y of the airbag lower portion 42L communicate to each other generally linearly in the top-bottom direction. Therefore, when the airbag 42 is expanded and developed, gas is supplied to the airbag 42 generally right downward, and the airbag lower portion 42L including the loin protection portion (waist guard portion B) is expanded generally right downward. This allows the loin protection portion to be expanded and developed quickly. Hence, at the time of a side crash of the vehicle, the airbag 42 can be located between the loins of the passenger and the door trim 19 with certainty to protect the passenger.

Furthermore, a method for folding a bag section of a side airbag device in Embodiment 4 described above is a method for folding a bag section (airbag 42) of a side airbag device including an airbag upper portion 42U including a chest protection portion (bust guard portion A) for protecting the chest of a passenger sitting on a seat 25 when the bag section is developed and an airbag lower portion 42L including a loin protection portion (waist protection portion B) for protecting the loins of the passenger sitting on the seat 25 when the bag section is developed. The method includes a first step (see FIG. 22) of turning a front edge f of the bag section, which is located on the front side in the vehicle when the bag section is developed, toward an inflator 50 located on the rear side of the vehicle when the bag section is developed, so that the bag section has a lengthy shape; and a second step (see FIG. 23) of folding the bag section such that a bottom part (see the second folds U) of the airbag upper portion 42U and a top part (see the first folds L) of the airbag lower portion 42L overlap each other (see the overlap portion OL) in a width direction of the vehicle, and such that a bottom end r of the airbag lower portion 42L is located below a top end of the airbag lower portion 42L. (See FIGS. 19, 22 and 23.)

According to this structure, in the first step, the front edge f of the bag section (see the airbag 42) is turned toward the inflator 50, and thus the bag section has a lengthy shape. In the second step, the bag section is folded such that the bottom part of the airbag upper portion 42U and the top part of the airbag lower portion 42L overlap each other in the width direction of the vehicle, and such that the bottom end r of the airbag lower portion 42L is located below the top end of the airbag lower portion 42L.

As described above, the bag section is folded such that the bottom part of the airbag upper portion 42U and the top part of the airbag lower portion 42L overlap each other (see the overlap portion OL) in the width direction of the vehicle, and such that the bottom end r of the airbag lower portion 42L is located below the top end of the airbag lower portion 42L. Therefore, when the airbag 42 is expanded and developed, gas is supplied to the airbag 42 generally right downward, and the airbag lower portion 42L including the loin protection portion (see waist guard portion B) is expanded generally right downward. This allows the loin protection portion to be expanded and developed quickly. Hence, at the time of a side crash of the vehicle, the airbag 42 can be located between the loins of the passenger and the door trim 19 (see FIG. 1) with certainty to protect the passenger.
In summary, the loin protection portion (waist guard portion B) of the airbag 42 is required to have a function of being expanded and developed more quickly than the chest protection portion (bust guard portion A) and, at the time of a side crash, first urging the body of the passenger inward in the vehicle chamber. Such a requirement can be fulfilled by the above-described folding method.

In Embodiment 4 shown in FIGS. 18 through 23 also, the other elements of the structure, the function and the effect are substantially the same as those in the above-described embodiments. Therefore, in FIGS. 18 through 23, identical elements as those in the previously described figures bear the identical reference signs thereto and detailed descriptions thereof are omitted.

The elements according to the present invention and the elements in the above-described embodiments correspond to each other as follows.
The chest protection portion according to the present invention corresponds to the bust guard portion A in the embodiments;
the loin protection portion according to the present invention corresponds to the waist guard portion B in the embodiments;
the partition according to the present invention corresponds to the seam 43 in the embodiments; and
the overlap area according to the present invention corresponds to the overlap portion OL in the embodiments.
However, the present invention is not limited merely to the above-described embodiments.
For example, as the partition, partitioning cloth may be used instead of the seam 43. When the front edge f of the airbag 42 is turned toward the inflator 50, the front edge f may be turned such that an opening made by the upper outer portion 42Uout of the airbag upper portion 42U, the lower outer portion 42Lout of the airbag lower portion 42L, the upper inner portion 42Uin of the airbag upper portion 42U and the lower inner portion 42Lin of the airbag lower portion 42L is directed forward of the vehicle. This is made possible when the zigzag folding structure shown in FIG. 16(b) is adopted.
The side airbag device having the above-described structure is also applicable to a front seat located on the right side of the vehicle or a rear seat.

### INDUSTRIAL APPLICABILITY

The present invention is usable for a side airbag device accommodated in a seat back of a seat for a vehicle and expanded and developed at the time of a side crash for protecting a passenger, and a method for folding a bag section thereof.

### REFERENCE SIGNS LIST

1 ... Vehicle chamber
19 ... Door trim
20 ... Armrest
25 ... Seat (seat for vehicle)
27 ... Seat back
32 ... Seat back side frame
42 ... Airbag
42L ... Airbag lower portion
42Lin ... Lower inner portion
42Lout ... Lower outer portion
42U ... Airbag upper portion
42Uin ... Upper inner portion
42Uout ... Upper outer portion
43 ... Seam (partition)
45 ... Step
50 ... Inflator
A ... Bust guard portion (chest protection portion)
B ... Waist guard portion (loin protection portion)
OL ... Overlap portion (overlap area)
L ... First fold
U ... Second fold
T ... Third fold
X, Y ... Inner path
Z ... Folded portion

## Claims

1. A side airbag device accommodated in a seat back of a seat for a vehicle, the side airbag device comprising:
an airbag; and
an inflator for supplying gas to the airbag to develop the airbag at the time of a crash of the vehicle;
wherein:
the airbag includes an airbag upper portion including a chest protection portion for protecting the chest of a passenger sitting on the seat when the airbag is developed and an airbag lower portion including a loin protection portion for protecting the loins of the passenger sitting on the seat when the airbag is developed; and
the airbag is accommodated in the state of being folded such that a bottom part of the airbag upper portion and a top part of the airbag lower portion overlap each other in a width direction of the vehicle, and such that a bottom end of the airbag lower portion is located below a top end of the airbag lower portion.

2. A side airbag device according to claim 1, wherein in the state where the airbag is folded,
the top end of the airbag lower portion has a first fold extending generally in a front-rear direction of the seat;
the bottom end of the airbag upper portion has a second fold extending generally in the front-rear direction of the seat; and
the first fold is located above the second fold.

3. A side airbag device according to claim 1, wherein in the state where the airbag is folded,
a front edge of the airbag, which is located on the front side when the airbag is developed, is turned toward the inflator, so that the airbag has a shape lengthy in a top-bottom direction;
the lengthy airbag upper portion includes an upper outer portion located on the outer side in the width direction of the vehicle and an upper inner portion located on the inner side in the width direction of the vehicle;
the top end of the airbag lower portion has a first fold extending generally in a front-rear direction of the seat;
the bottom end of the airbag upper portion has a second fold extending generally in the front-rear direction of the seat;
a folded portion is formed between the first fold and the second fold; and
the airbag is folded internally such that the first fold, the second fold, and the folded portion are held between the upper outer portion and the upper inner portion.

4. A side airbag device according to claim 1, wherein in the state where the airbag is folded,
a front edge of the airbag, which is located on the front side when the airbag is developed, is turned toward the inflator, so that the airbag has a shape lengthy in a top-bottom direction;
the airbag lower portion having the lengthy shape includes a lower outer portion located on the outer side in the width direction of the vehicle and a lower inner portion located on the inner side in the width direction of the vehicle;
the top end of each of the lower outer portion and the lower inner portion has a first fold extending generally in a front-rear direction of the seat;
the bottom end of the airbag upper portion has a second fold extending generally in the front-rear direction of the seat;
a folded portion is formed between each of the first folds and the second fold; and
the airbag is folded externally such that the folded portion of the lower outer portion and the folded portion of the lower inner portion are located outside the airbag upper portion.

5. A side airbag device according to any of claims 2 through 4, wherein:
a third fold located below the first fold and extending generally in the front-rear direction of the seat is provided in the bottom part of the loin protection portion; and
a part of the loin protection portion, which is located below the third fold when the airbag is developed, is folded internally or externally.

6. A side airbag device according to any one of claims 1 through 5, wherein:
the chest protection portion and the loin protection portion of the airbag are partitioned from each other by a partition extending generally from front to rear in the state where the airbag is developed, except for a gas inlet of the inflator and the vicinity thereof.

7. A side airbag device according to any one of claims 1 through 6, wherein:
a door trim located to the side of the seat includes an armrest projecting inward in a vehicle chamber; and
the airbag is folded in the state where the overlap area of the airbag upper portion and the airbag lower portion is located below a top surface of the armrest.

8. A side airbag device according to any one of claims 1 through 7, wherein in the state where the side airbag device is accommodated in the seat back,
the airbag is folded such that a rear edge of the airbag upper portion is located rear to a rear edge of the airbag lower portion; and
a step is formed in generally in the front-rear direction of the seat between the rear edge of the airbag upper portion and the rear edge of the airbag lower portion.

9. A side airbag device according to any one of claims 1 through 8, wherein the inflator is provided in a bottom part of the seat back side frame, and the airbag upper portion is folded in the state where a top end thereof is turned downward.

10. A side airbag device accommodated in a seat back of a seat for a vehicle, the side airbag device comprising:
an airbag; and
an inflator for supplying gas to the airbag to develop the airbag at the time of a crash of the vehicle;
wherein:
the airbag includes an airbag upper portion including a chest protection portion for protecting the chest of a passenger sitting on the seat when the airbag is developed and an airbag lower portion including a loin protection portion for protecting the loins of the passenger sitting on the seat when the airbag is developed; and
the airbag is folded in the state where an inner path of the airbag upper portion and an inner path of the airbag lower portion communicate to each other generally linearly in a top-bottom direction.

11. A method for folding a bag section of a side airbag device including an airbag upper portion including a chest protection portion for protecting the chest of a passenger sitting on a seat when the bag section is developed and an airbag lower portion including a loin protection portion for protecting the loins of the passenger sitting on the seat when the bag section is developed;
the method comprising:
a first step of turning a front edge of the bag section, which is located on the front side of a vehicle when the bag section is developed, toward an inflator located on the rear side of the vehicle when the bag section is developed, so that the bag section has a lengthy shape; and
a second step of folding the bag section such that a bottom part of the airbag upper portion and a top part of the airbag lower portion overlap each other in a width direction of the vehicle, and such that a bottom end of the airbag lower portion is located below a top end of the airbag lower portion.
